(19) Europäisches Patentamt
European Patent Office
Office européen des brevets

(11) **EP 4 753 163 A1**

(12) **EUROPEAN PATENT APPLICATION**
published in accordance with Art. 153(4) EPC

(43) Date of publication:
03.06.2026 Bulletin 2026/23

(21) Application number: 24872998.0

(22) Date of filing: 26.09.2024

(51) International Patent Classification (IPC):
*H04B 7/0413* (2017.01)   *H04W 72/1268* (2023.01)
*H04W 72/21* (2023.01)   *H04W 72/231* (2023.01)
*H04W 72/232* (2023.01)   *H04L 5/00* (2006.01)

(52) Cooperative Patent Classification (CPC):
H04B 7/0413; H04L 5/00; H04W 72/1268;
H04W 72/21; H04W 72/231; H04W 72/232

(86) International application number:
PCT/KR2024/014640

(87) International publication number:
WO 2025/071290 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.09.2023 KR 20230129629

(71) Applicants:
• **Hyundai Motor Company**
  **Seoul 06797 (KR)**
• **Kia Corporation**
  **Seoul 06797 (KR)**
• **Gachon University of Industry-Academic**
  **Cooperation Foundation**
  **Seongnam-si, Gyeonggi-do 13120 (KR)**

(72) Inventors:
• **HONG, Ui Hyun**
  **Hwaseong-si Gyeonggi-do 18280 (KR)**
• **SON, Hyuk Min**
  **Seoul 05698 (KR)**
• **SUH, Young Kil**
  **Hwaseong-si Gyeonggi-do 18280 (KR)**
• **LEE, Jeong Su**
  **Hwaseong-si Gyeonggi-do 18280 (KR)**
• **HAHN, Gene Back**
  **Hwaseong-si Gyeonggi-do 18280 (KR)**

(74) Representative: **Isarpatent**
**Patent- und Rechtsanwälte Part G mbB**
**Friedrichstrasse 31**
**80801 München (DE)**

(54) **METHOD AND APPARATUS FOR SWITCHING UPLINK SIGNAL TRANSMISSION SCHEME IN WIRELESS COMMUNICATION SYSTEM**

(57) The present disclosure is directed to configuring a method of transmitting an uplink signal in a wireless communication system, and the method that is performed by a terminal may include receiving a higher layer signal and at least one piece of downlink control information (DCI) from a transmission reception point (TRP), configuring a signal transmission scheme of an uplink shared channel as one of a single-TRP (sTRP) transmission scheme and a multi-TRP (mTRP) scheme based on the higher layer signal and the at least one piece of DCI, configuring a signal transmission scheme of an uplink control channel as one of the sTRP transmission scheme and the mTRP transmission scheme based on at least one of the higher layer signal and the at least one piece of DCI, and transmitting an uplink shared channel signal and an uplink control channel signal to the TRP according to the configured signal transmission scheme.

EP 4 753 163 A1

START

S2010

RECEIVE HIGHER LAYER SIGNAL AND
AT LEAST ONE PIECE OF DCI FROM TRP

S2020

CONFIGURE SIGNAL TRANSMISSION SCHEME OF UPLINK
SHARED CHANNEL AS ONE OF SINGLE-TRP TRANSMISSION
SCHEME AND MULTI-TRP SCHEME BASED ON HIGHER
LAYER SIGNAL AND AT LEAST ONE PIECE OF DCI

S2030

CONFIGURE SIGNAL TRANSMISSION SCHEME OF
UPLINK CONTROL CHANNEL AS ONE OF SINGLE-TRP
TRANSMISSION SCHEME AND MULTI-TRP TRANSMISSION
SCHEME BASED ON AT LEAST ONE OF HIGHER
LAYER SIGNAL AND AT LEAST ONE PIECE OF DCI.

S2040

TRANSMIT UPLINK SHARED CHANNEL SIGNAL AND
UPLINK CONTROL CHANNEL SIGNAL TO TRP ACCORDING
TO CONFIGURED SIGNAL TRANSMISSION SCHEMES.

END

**FIG. 20**

**Description**

**Technical field**

The present disclosure relates to an apparatus and method for switching an uplink signal transmitting scheme in a wireless communication system.

**Background Art**

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6 GHz and above 6 GHz. That is, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, the multiple transmission and reception point (mTRP) technology in 5G NR refers to a technique the enables a base station (e.g., a gNB) to communicate with a terminal by using physically separated multiple TRPs. The MTRP technique may solve the problem that the quality of service (QoS) is degraded since a terminal located at a cell edge is far away from a base station, as well as the problem of inter-cell interference received from base stations located in different cells. In addition, the MTRP technique may provide an additional communication path from a base station as a non line-of-sight (NLOS) path in a millimeter wave band where an LOS path from the base station is limited.

Beam management for a TRP in 5G NR may be defined as a set of L1/L2 procedures in which an optimal beam for transmission and reception at each of the TRP and a terminal is found or maintained. In particular, for beam management related to analog beamforming, a transmission configuration index (TCI) has been introduced to configure a terminal's reception beam for a specific channel/signal such as a PDSCH, a CSI-RS, and a PDCCH. The TCI has been introduced to dynamically indicate quasi-colocation (QCL) information through downlink control information (DCI) at a base station.

On the other hand, depending on the state and condition of a communication channel, it is necessary to switch an uplink signal transmission scheme between a single transmission and reception point (sTRP) scheme and a multi-transmission and reception point scheme. However, no method and related procedure are defined for switching the uplink signal transmission scheme between the single transmission and reception point scheme and the multi-transmission and reception point scheme. Accordingly, a method of switching the uplink signal transmission scheme between the single transmission and reception point scheme and the multi-transmission and reception point scheme is required.

Meanwhile, the description of the background technology of the present invention is provided solely for the purpose of enhancing the understanding of the background of the present invention and may include information that is not considered the conventional technology known to a person having ordinary skill in the art.

**Description of Invention**

**Technical Problem**

The present disclosure may provide an apparatus and method for configuring a transmission scheme of an uplink signal as a sTRP scheme or mTRP scheme based on single uplink DCI in a wireless communication system.

The present disclosure may provide an apparatus and method for independently configuring a signal transmission scheme for each of an uplink shared channel and an uplink control channel based on single uplink DCI in a wireless communication system.

The present disclosure may provide an apparatus and method for configuring an identical signal transmission scheme for both an uplink shared channel and an uplink control channel based on single uplink DCI in a wireless communication system.

The technical objects to be achieved by the present disclosure are not limited to those mentioned above, and other technical problems not mentioned herein may also be considered by those skilled in the art to which the present disclosure pertains, based on the embodiments described below.

**Technical Solution**

As an example of the present disclosure, a method of operating a terminal in a wireless communication system includes receiving a higher layer signal and at least one piece of downlink control information (DCI) from a transmission reception point (TRP), configuring a signal transmission scheme of an uplink shared channel as one of a single-TRP (sTRP) transmission scheme and a multi-TRP (mTRP) scheme based on the higher layer signal and the at least one piece of DCI, configuring a signal transmission scheme of an uplink control channel as one of the sTRP transmission scheme and the mTRP transmission scheme based on at least one of the higher layer signal and the at least one piece of DCI, and transmitting an uplink shared channel signal and an uplink control channel signal to the TRP according to the configured signal transmission scheme.

Here, the signal transmission scheme of the uplink shared channel may be configured based on a scheme indicated by a sounding reference signal (SRS) resource set indicator of uplink DCI.

Here, the signal transmission scheme of the uplink control channel and the signal transmission scheme of the uplink shared channel may be configured independently of each other.

Here, the signal transmission scheme of the uplink control channel may be configured based on a transmission configuration indicator (TCI) state indicator indicated by the higher layer signal.

Here, the signal transmission scheme of the uplink control channel may be configured based on TCI state-related information of a radio resource control (RRC) signal.

Here, the signal transmission scheme of the uplink control channel may be configured to be the same as the signal transmission scheme of the uplink shared channel.

Here, based on a value of the SRS resource set indicator of the uplink DCI being a predetermined value, the signal transmission scheme of the uplink control channel may be configured to be the same as the signal transmission scheme of the uplink shared channel.

Here, based on the uplink DCI not including the SRS resource set indicator, the signal transmission scheme of the uplink shared channel may be configured based on a scheme indicated by TCI state-related information of downlink DCI that is transmitted before the uplink DCI.

As an example of the present disclosure, a method of operating a transmission and reception point (TRP) in a wireless communication system includes transmitting a higher layer signal and at least one piece of downlink control information (DCI) to a terminal, receiving an uplink shared channel signal from the terminal, and receiving an uplink control channel signal from the terminal, wherein a signal transmission scheme of an uplink shared channel and a signal transmission scheme of an uplink control channel may be configured as one of a single-TRP (sTRP) transmission scheme and a multi-TRP (mTRP) scheme based on the higher layer signal and the at least one piece of DCI.

Here, the signal transmission scheme of the uplink shared channel may be configured based on a scheme indicated by a sounding reference signal (SRS) resource set indicator of uplink DCI.

Here, the signal transmission scheme of the uplink control channel and the signal transmission scheme of the uplink shared channel may be configured independently to each other.

Here, the signal transmission scheme of the uplink control channel may be configured based on a transmission configuration indicator (TCI) state indicator indicated by the higher layer signal.

Here, the signal transmission scheme of the uplink control channel may be configured based on TCI state-related information of a radio resource control (RRC) signal.

Here, the signal transmission scheme of the uplink control channel may be configured to be the same as the signal transmission scheme of the uplink shared channel.

Here, based on a value of the SRS resource set indicator of the uplink DCI being a predetermined value, the signal transmission scheme of the uplink control channel may be configured to be the same as the signal transmission scheme of the uplink shared channel.

Here, based on the uplink DCI not including the SRS resource set indicator, the signal transmission scheme of the uplink shared channel may be configured based on a scheme indicated by TCI state-related information of downlink DCI that is transmitted before the uplink DCI.

As an example of the present disclosure, a terminal in a wireless communication system includes at least one transmitter, at least one receiver, at least one processor, and at least one memory that is operatively coupled to the at least one processor and stores instructions that cause, when executed, the at least one processor to perform a specific operation, wherein the specific operation may include receiving a higher layer signal and at least one piece of downlink control information (DCI) from a transmission reception point (TRP), configuring a signal transmission scheme of an uplink shared channel as one of a single-TRP (sTRP) transmission scheme and a multi-TRP (mTRP) scheme based on the higher layer signal and the at least one piece of DCI, configuring a signal transmission scheme of an uplink control channel as one of the sTRP transmission scheme and the mTRP transmission scheme based on at least one of the higher layer signal and the at least one piece of DCI, and transmitting an uplink shared channel signal and an uplink control channel signal to the TRP according to the configured signal transmission scheme.

As an example of the present disclosure, a transmission reception point (TRP) operating in a wireless communication system includes at least one transmitter, at least one receiver, at least one processor, and at least one memory that is operatively coupled to the at least one processor and stores instructions that cause, when executed, the at least one processor to perform a specific operation, wherein the specific operation may include receiving an uplink shared channel signal from the terminal and receiving an uplink control channel signal from the terminal, and a signal transmission scheme of an uplink shared channel and a signal transmission scheme of an uplink control channel may be configured as one of a single-TRP (sTRP) transmission scheme and a multi-TRP (mTRP) scheme based on the higher layer signal and the at least one piece of DCI.

The above-described aspects of the present disclosure are merely some of the preferred embodiments, and various embodiments reflecting the technical features of the present disclosure may be derived and understood by those skilled in the art based on the following detailed description of the present disclosure.

**Advantageous Effects**

The following effects may be achieved by embodiments based on the present disclosure.

According to the present disclosure, a transmission scheme of an uplink signal can be configured as a single-TRP scheme or a multi-TRP scheme based on single uplink DCI in a wireless communication system.

According to the present disclosure, a transmission scheme of an uplink signal can be efficiently switched based on single uplink DCI in a wireless communication system.

The effects obtainable from the embodiments of the present disclosure are not limited to those described above, and other effects not specified herein may be clearly derived and understood by those skilled in the art from the following description of the embodiments of the present disclosure. That is, unintended effects resulting from the implementations described in the present disclosure may also be derived by those skilled in the art from the embodiments of the present disclosure.

**Description of the Drawings**

The drawings attached below are provided to assist in the understanding of the present disclosure and, together with the detailed description, may illustrate embodiments of the present disclosure. However, the technical features of the present disclosure are not limited to any particular drawing, and the features disclosed in each drawing may be combined with one another to constitute new embodiments. Reference numerals in each drawing may indicate structural elements.

FIG. 1 is a conceptual diagram illustrating an embodiment of a communication system.
FIG. 2 is a block diagram illustrating an embodiment of a communication node constituting a communication system.
FIG. 3 is a block diagram illustrating embodiments of wireless devices that perform communication.
FIG. 4A is a block diagram illustrating an embodiment of a transmission path.
FIG. 4B is a block diagram illustrating an embodiment of a reception path.
FIG. 5 is a conceptual diagram illustrating an embodiment of a system frame in a communication system.
FIG. 6 is a conceptual diagram illustrating an embodiment of a subframe in a communication system.
FIG. 7 is a conceptual diagram illustrating an embodiment of a slot in a communication system.
FIG. 8 is a conceptual diagram illustrating an embodiment of a time-frequency resource in a communication system.
FIG. 9 illustrates an example of a QCL relationship between reference signals that are applicable to the present disclosure.
FIG. 10 illustrates an example of a procedure of collectively configuring a beam for multiple channels or reference signals through a unified TCI state according to an embodiment of the present disclosure.
FIG. 11 illustrates an example of a procedure of configuring each layer for delivering a TCI state in an M-TRP structure according to an embodiment of the present disclosure.
FIG. 12 illustrates an example of a procedure of transmitting an uplink signal according to an embodiment of the present disclosure.
FIG. 13 illustrates an example of a procedure of configuring a signal transmission scheme for an uplink shared channel signal and an uplink control channel signal and transmitting the signals according to an embodiment of the present disclosure.
FIG. 14 illustrates an example of a procedure of configuring a signal transmission scheme of an uplink control channel based on a TCI state that is indicated by a higher layer signal according to an embodiment of the present disclosure.
FIG. 15 illustrates an example of a procedure of configuring a signal transmission scheme of an uplink control channel based on a TCI state that is set by RRC according to an embodiment of the present disclosure.
FIG. 16 illustrates an example of a procedure of configuring the same signal transmission scheme both for an uplink shared channel signal and an uplink control channel signal and transmitting the signals according to an embodiment of the present disclosure.

FIG. 17 illustrates an example of a procedure of configuring a signal transmission scheme for an uplink shared channel signal and an uplink control channel signal according to an embodiment of the present disclosure.

FIG. 18 illustrates an example of a procedure of configuring a signal transmission scheme for an uplink shared channel signal and an uplink control channel signal according to an embodiment of the present disclosure.

FIG. 19 illustrates an example of a procedure of configuring a transmission scheme of an uplink signal based on whether an SRS resource set indicator of uplink DCI is present according to an embodiment of the present disclosure.

FIG. 20 illustrates an example of a procedure of configuring a transmission scheme of an uplink signal according to an embodiment of the present disclosure.

## Modes of the Invention

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)). In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

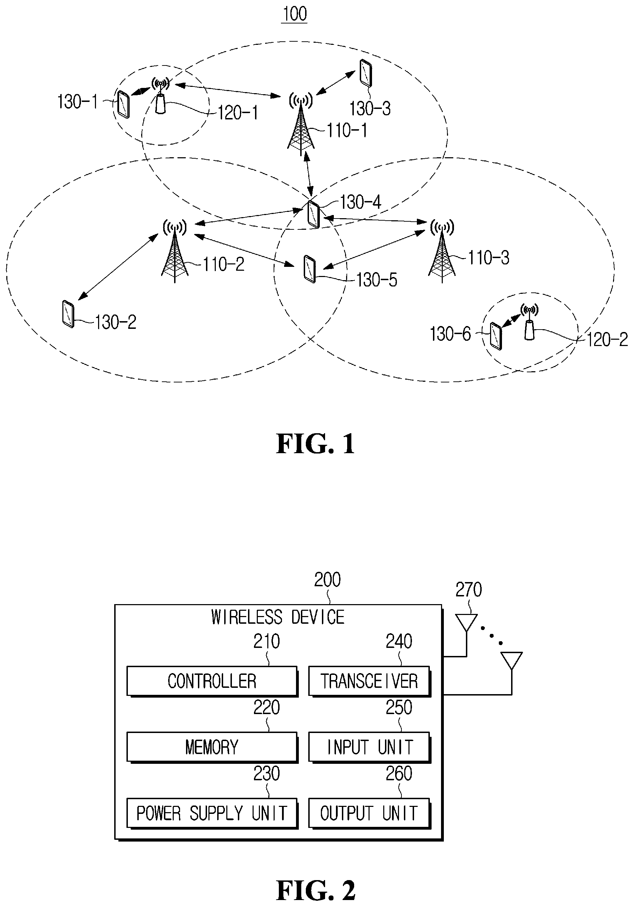

FIG. 1 is a conceptual diagram illustrating an embodiment of a communication system.

Referring to FIG. 1, a communication system 100 may include a plurality of communication nodes 110-1, 110-2, 110-3, 120-1, 120-2, 130-1, 130-2, 130-3, 130-4, 130-5, and 130-6. In addition, the communication system 100 may further include a core network (e.g., serving-gateway (S-GW), packet data network (PDN)-gateway (P-GW), and mobility management entity (MME)). When the communication system 100 is a 5G communication system (e.g., a new radio (NR) system), the core network may include an access and mobility management function (AMF), a user plane function (UPF), and a session management function (SMF).

The plurality of communication nodes 110 to 130 may support a communication protocol (e.g., an LTE communication protocol, an LTE-A communication protocol, and an NR communication protocol) supported by the 3rd generation partnership project (3GPP) standard. The plurality of communication nodes 110 to 130 may support the code division multiple access (CDMA) technology, the wideband CDMA (WCDMA) technology, the time division multiple access (TDMA) technology, the frequency division multiple access (FDMA) technology, the orthogonal frequency division multiplexing (OFDM) technology, the filtered OFDM technology, the cyclic prefix (CP)-OFDM technology, the discrete Fourier transform-spread-OFDM (DFT-s-OFDM) technology, the single-carrier (SC)-FDMA technology, the non-orthogonal multiple access (NOMA) technology, the generalized frequency division multiplexing (GFDM) technology, the filter bank multi-carrier (FBMC) technology, the universal filtered multi-carrier (UFMC) technology, and the space division multiple access (SDMA) technology. Each of the plurality of communication nodes may have the following structure.

FIG. 2 is a block diagram illustrating an embodiment of a communication node constituting a communication system.

FIG. 2 is a drawing showing an example of a wireless device 200 in a wireless communication system according to an embodiment of the present disclosure. The wireless device 200 according to the embodiment of the present disclosure may be a mobile terminal such as a smartphone, a tablet PC, and a wearable device but may not be limited thereto.

Referring to FIG. 2, the wireless device 200 may include at least one controller 210, at least one memory 220, at least one power supply unit 230, at least one transceiver 240, at least one input unit 250, at least one output unit 260, and/or at least one antenna 270.

The controller 210 may control the memory 220 and/or the transceiver 240 and may be configured to implement a description, a function, a procedure, a proposal, a method and/or an operational flowchart that are disclosed in the present disclosure. The memory 220 may be connected to the controller 210 and store various types of information associated with the operation of the controller 210. For example, the memory 220 may store a software code including instructions for executing a portion or all of controls controlled by the controller 210 or for executing a description, a function, a procedure, a proposal, a method and/or an operational flowchart that are disclosed in the present disclosure. The memory is not formed in any specific limited manner. As an example, the memory 120 may be formed as at least one of a read only memory (ROM) and a random access memory (RAM).

The at least one controller 210 may be referred to as a controller, a microcontroller, a microprocessor, or a micro computer. A description, a function, a procedure, a proposal, a method and/or an operational flowchart that are disclosed in the present disclosure may be implemented using firmware or software in the form of a code, an instructions, and/or a set of instructions. Here, the firmware or the software may execute another program such as an OS stored in the memory 220. The controller 210 may be implemented to support a beamforming or directional routing operation in which a signals outgoing from the at least one antenna 270 is weighted differently to be effectively steered in a desired direction.

In addition, the at least one controller 210 may be combined with a backhaul or network interface. The wireless device 200 may perform communication with another wireless device through the backhaul or network interface. The controller 210 may include at least one processor. The processor may be a central processing unit (CPU), a graphics processing unit (GPU), or a dedicated processor that performs methods according to the embodiments of the present disclosure.

The at least one transceiver 240 may be connected to the controller 201 and transmit and/or receive a wireless signal through the at least one antenna 270. The transceiver 240 may include a transmitter and/or a receiver. The at least one transceiver 240 may transmit user data, control information, and a wireless signal/channel, which are mentioned in a method and/or an operational flowchart of the present disclosure, to at least one other device. For example, the at least one transceiver 240 may be connected to the at least one controller 210 and transmit/receive a wireless signal. In addition, the at least one controller 210 may control the at least one transceiver 240 to transmit user data, control information, or a wireless signal to at least one other device. The at least one transceiver 240 may receive a signal transmitted by another wireless device from the at least one antenna 270. In addition, the at least one transceiver 240 may down-convert or up-convert the received signal to generate a baseband signal. The at least one antenna 270 may be a plurality of physical antennas or a plurality of logical antennas (e.g., antenna ports).

The input unit 250 may obtain information such as a user input, an image, and audio and include various input devices such as diverse mechanical/electronic input devices, a camera, and a microphone. The output unit 260 aims to generate an output related to vision, hearing, or touch and provide information to a user and may include a display, a speaker, and a vibration module. The wireless device 200 supplies power through the power supply unit 230, and the power supply unit 230 may include a wired/wireless charge circuit and a battery.

Referring to FIG. 1 again, the communication system 100 may include a plurality of base stations 110-1, 110-2, 110-3, 120-1, and 120-2 and a plurality of terminals 130-1, 130-2, 130-3, 130-4, 130-5, and 130-6. Each of the first base station 110-1, the second base station 110-2, and the third base station 110-3 may form a macro cell. Each of the fourth base station 120-1 and the fifth base station 120-2 may form a small cell. The fourth base station 120-1, the third terminal 130-3, and the fourth terminal 130-4 may belong to the cell coverage of the first base station 110-1. The second terminal 130-2, the fourth terminal 130-4, and the fifth terminal 130-5 may belong to the cell coverage of the second base station 110-2. The fifth base station 120-2, the fourth terminal 130-4, the fifth terminal 130-5, and the sixth terminal 130-6 may belong to the cell coverage of the third base station 110-3. The first terminal 130-1 may belong to the cell coverage of the fourth base station 120-1. The sixth terminal 130-6 may belong to the cell coverage of the fifth base station 120-2.

Here, each of the plurality of base stations 110-1, 110-2, 110-3, 120-1, and 120-2 may be referred to as a nodeB (NB), an evolved NodeB (eNB), a gNB, an advanced base station (ABS), a high reliability-base station (HR-BS), a base transceiver station (BTS), a radio base station, a radio transceiver, an access point, an access node, a radio access station (RAS), a mobile multihop relay-base station (MMR-BS), a relay station (RS), an advanced relay station (ARS), a high reliability-relay station (HR-RS), a home NodeB (HNB), a home eNodeB (HeNB), a road side unit (RSU), a radio remote head (RRH), a transmission point (TP), or a transmission and reception point (TRP).

Each of the plurality of terminals 130-1, 130-2, 130-3, 130-4, 130-5, and 130-6 may be referred to as a user equipment (UE), a terminal equipment (TE), an advanced mobile station (AMS), a high reliability-mobile station (HR-MS), a terminal, an access terminal, a mobile terminal, a station, a subscriber station, a mobile station, a portable subscriber station, a node, a device, or an onboard unit (OBU).

Meanwhile, each of the plurality of base stations 110-1, 110-2, 110-3, 120-1, and 120-2 may operate in a different frequency band or operate in the same frequency band. Each of the plurality of base stations 110-1, 110-2, 110-3, 120-1, and 120-2 may be connected to each other via an ideal backhaul link or a non-ideal backhaul link and exchange information with each other via an ideal backhaul link or a non-ideal backhaul link. Each of the plurality of base stations 110-1, 110-2, 110-3, 120-1, and 120-2 may be connected to a core network via an ideal backhaul link or a non-ideal backhaul link. Each of the plurality of base stations 110-1, 110-2, 110-3, 120-1, and 120-2 may transmit a signal received from the core network to the terminals 130-1, 130-2, 130-3, 130-4, 130-5, and 130-6 and transmit a signal received from the terminals 130-1, 130-2, 130-3, 130-4, 130-5, and 130-6 to the core network.

In addition, each of the plurality of base stations 110-1, 110-2, 110-3, 120-1, and 120-2 may support MIMO transmission (e.g., single user (SU)-MIMO, multi user (MU)-MIMO, and massive MIMO), coordinated multipoint (CoMP) transmission, carrier aggregation (CA) transmission, transmission in an unlicensed band, sidelink communication (e.g., device-to-device (D2D) communication and proximity services (ProSe)), Internet of Things (IoT) communication, and dual connectivity (DC). Here, each of the plurality of terminals 130-1, 130-2, 130-3, 130-4, 130-5, and 130-6 may perform an operation corresponding to the base stations 110-1, 110-2, 110-3, 120-1, and 120-2 and an operation supported by the base stations 110-1, 110-2, 110-3, 120-1, and 120-2. For example, the second base station 110-2 may transmit a signal to the fourth terminal 130-4 based on a SU-MIMO scheme, and the fourth terminal 130-4 may receive a signal from the second base station 110-2 based on the SU-MIMO scheme. Alternatively, the second base station 110-2 may transmit a signal to the fourth terminal 130-4 and the fifth terminal 130-5 based on the MU-MIMO scheme, and the fourth terminal 130-4 and the fifth terminal 130-5 may each receive a signal from the second base station 110-2 based on the MU-MIMO scheme.

Each of the first base station 110-1, the second base station 110-2, and the third base station 110-3 may transmit a signal to the fourth terminal 130-4 based on a CoMP scheme, and the fourth terminal 130-4 may receive a signal from the first base station 110-1, the second base station 110-2, and the third base station 110-3 based on the CoMP scheme. Each of the plurality of base stations 110-1, 110-2, 110-3, 120-1, and 120-2 may transmit/receive a signal to/from the terminals 130-1, 130-2, 130-3, 130-4, 130-5, and 130-6 belonging to the cell coverage of each of the base stations based on a CA scheme. Each of the first base station 110-1, the second base station 110-2, and the third base station 110-3 may control sidelink communication with the fourth terminal 130-4 and the fifth terminal 130-5, and each of the fourth terminal 130-4 and the fifth terminal 130-5 may perform sidelink communication under the control of each of the second base station 110-2 and the third base station 110-3.

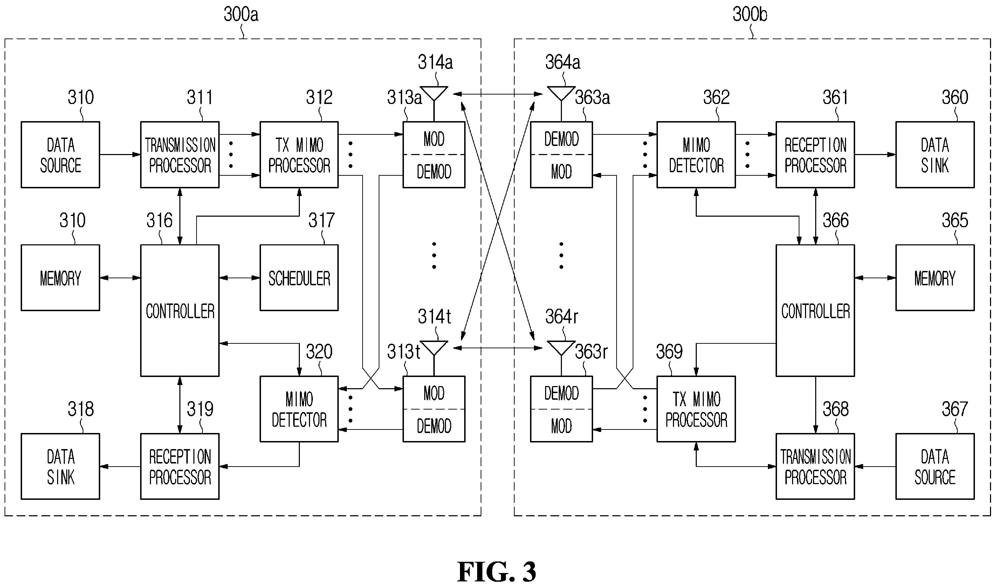

Meanwhile, communication nodes that perform communications in the communication network may be configured as follows. A communication node shown in FIG. 3 may be a specific exemplary embodiment of the wireless device shown in FIG. 2.

FIG. 3 is a block diagram illustrating an exemplary embodiment of wireless devices performing communication.

As shown in FIG. 3, each of a first wireless device 300a and a second wireless device 300b may be a base station or UE. The first wireless device 300a may transmit a signal to the second wireless device 300b. A transmission processor 311 included in the first wireless device 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first wireless device 300a may be received at antennas 364a to 364r of the second wireless device 300b. The signals received at the antennas 364a to 364r may be provided to demodulators (DEMODs) included in transceivers 363a to 363r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second wireless device 300b may transmit signals to the first wireless device 300a. A transmission processor 369 included in the second wireless device 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second wireless device 300b may be received at the antennas 314a to 314r of the first wireless device 300a. The signals received at the antennas 314a to 314r may be provided to demodulators (DEMODs) included in the transceivers 313a to 313r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

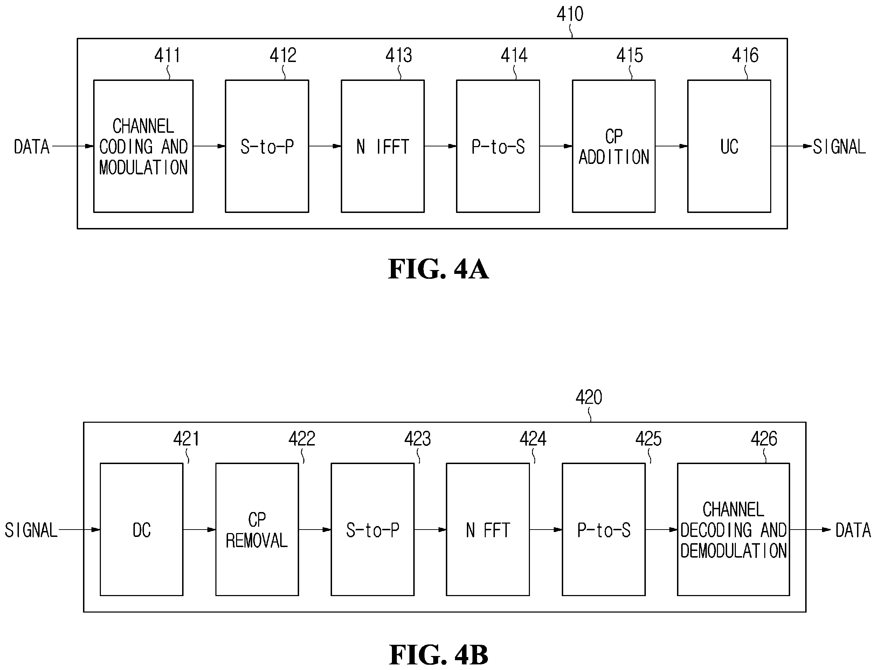

FIG. 4A is a block diagram illustrating an exemplary embodiment of a transmission path, and FIG. 4B is a block diagram illustrating an exemplary embodiment of a reception path.

Referring to FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 411 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

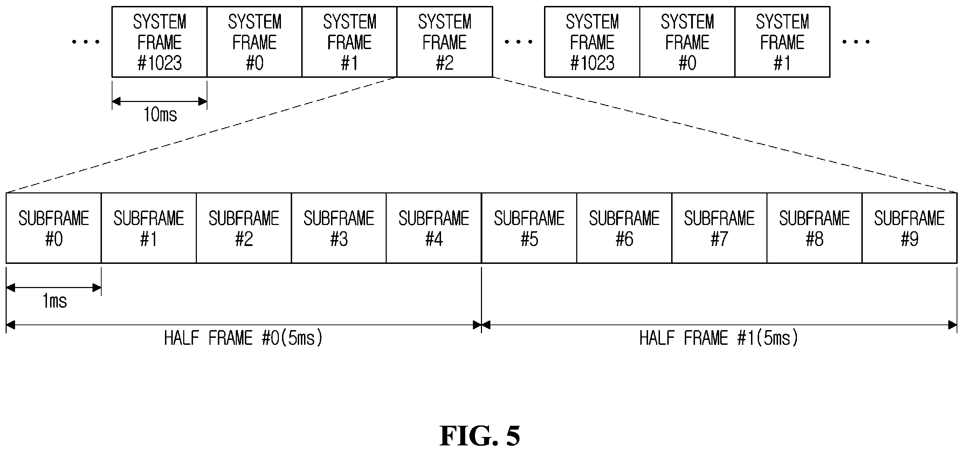

FIG. 5 is a conceptual diagram illustrating an embodiment of a system frame in a communication system.

Referring to FIG. 5, time resources in a communication network may be divided into frames. For example, system frames may be configured consecutively in the time domain of the communication system. Each of the system frames may has a length of 10 milliseconds (ms). System frame numbers (SFNs) may be set to #0 to #1023. In this case, 1024 system frames may be repeated in the time domain of the communication system. For example, an SFN of a system frame after the system frame # 1023 may be #0.

One system frame may include two half frames. The length of one half frame may be 5 ms. A half frame located in a starting region of a system frame may be referred to as a 'half frame #0', and a half frame located in an ending region of the system frame may be referred to as a 'half frame #1'. The system frame may include 10 subframes. The length of one subframe may be 1 ms. 10 subframes within one system frame may be referred to as 'subframes # 0 to #9'.

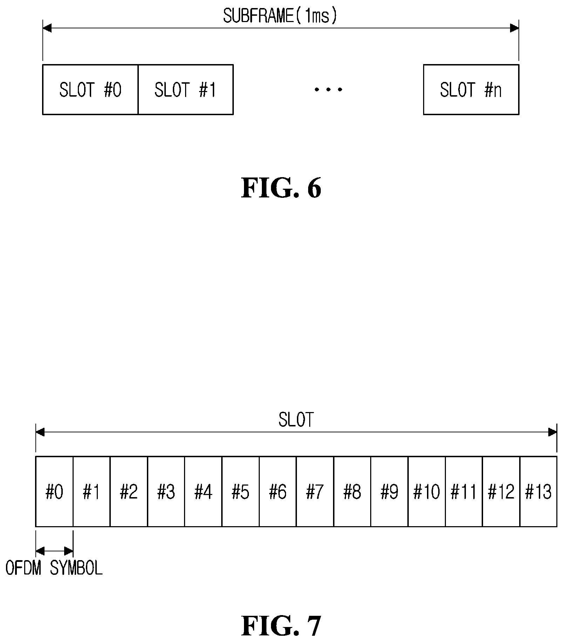

FIG. 6 is a conceptual diagram illustrating an embodiment of a subframe in a communication system.

Referring to FIG. 6, one subframe may include n slots, and n may be a natural number. Accordingly, one subframe may be composed of one or more slots.

FIG. 7 is a conceptual diagram illustrating an embodiment of a slot in a communication system.

Referring to FIG. 7, one slot may include one or more symbols. One slot shown in FIG. 7 may include 14 symbols. The length of the slot may vary depending on the number of symbols included in the slot and the length of the symbol. Alternatively, the length of the slot may vary according to a numerology.

A numerology applied to physical signals and channels in a communication system may be variable. A numerology may be varied to meet various technical requirements of a communication system. In a communication system employing cyclic prefix (CP)-based OFDM waveform technology, a numerology may include subcarrier spacing and CP length (or CP type). Table 1 may be an embodiment of a method for configuring numerology for a CP-OFDM-based communication system. Depending on a frequency band in which the communication system operates, at least some of the numerologies in Table 1 may be supported. In addition, the communication system may further support one or more numerologies not specified in Table 1.

[Table 1]

| Subcarrier spacing | 15 kHz | 30 kHz | 60 kHz | 120 kHz | 240 kHz | 480 kHz |
|---|---|---|---|---|---|---|
| OFDM symbol length [$\mu$s] | 66.7 | 33.3 | 16.7 | 8.3 | 4.2 | 2.1 |
| CP length [$\mu$s] | 4.76 | 2.38 | 1.19 | 0.60 | 0.30 | 0.15 |
| Number of OFDM symbols within 1 ms | 14 | 28 | 56 | 112 | 224 | 448 |

When a subcarrier spacing is 15 kHz (e.g., $\mu$=0), the length of the slot may be 1 ms. In this case, one system frame may include 10 slots. When the subcarrier spacing is 30 kHz (e.g., $\mu$=1), the length of the slot may be 0.5 ms. In this case, one system frame may include 20 slots.

When the subcarrier spacing is 60 kHz (e.g., $\mu$=2), the length of the slot may be 0.25 ms. In this case, one system frame may include 40 slots. When the subcarrier spacing is 120 kHz (e.g., $\mu$=3), the length of the slot may be 0.125 ms. In this case, one system frame may include 80 slots. When the subcarrier spacing is 240 kHz (e.g., $\mu$=4), the length of the slot may be 0.0625 ms. In this case, one system frame may include 160 slots.

The symbol may be configured as a downlink (DL) symbol, a flexible symbol, or an uplink (UL) symbol. A slot composed only of DL symbols may be referred to as 'DL slot', a slot composed only of FL symbols may be referred to as 'FL slot', and a slot composed only of UL symbols may be referred to as 'UL slot'.

A slot format may be configured semi-statically by higher layer signaling (e.g., radio resource control (RRC) signaling). Information indicating a semi-static slot format may be included in system information, and the semi-static slot format may be configured in a cell-specific manner. In addition, a semi-static slot format may be additionally configured for each terminal through terminal-specific higher layer signaling (e.g., RRC signaling). A flexible symbol of a slot format configured cell-specifically may be overridden by a downlink symbol or an uplink symbol by terminal-specific higher layer signaling. In addition, a slot format may be dynamically indicated by physical layer signaling (e.g., slot format indicator (SFI) included in downlink control information (DCI)). The semi-statically configured slot format may be overridden by a dynamically indicated slot format. For example, a flexible symbol that is semi-statically configured may be overridden by a downlink symbol or an uplink symbol by SFI.

A reference signal may be a channel state information-reference signal (CSI-RS), a sounding reference signal (SRS), a demodulation-reference signal (DM-RS), a phase tracking-reference signal (PT-RS), or the like. A channel may be a physical broadcast channel (PBCH), a physical downlink control channel (PDCCH), a physical downlink shared channel (PDSCH), a physical uplink control channel (PUCCH), a physical uplink shared channel (PUSCH), a physical sidelink control channel (PSCCH), a physical sidelink shared channel (PSSCH), or the like. In the present disclosure, a control channel may refer to a PDCCH, a PUCCH, or a PSCCH, and a data channel may refer to a PDSCH, a PUSCH, or a PSSCH.

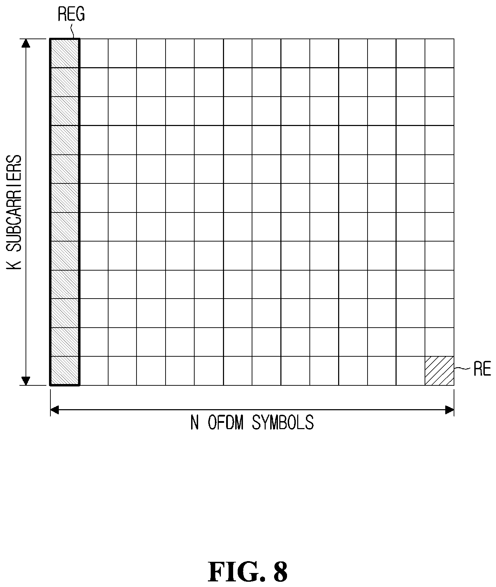

FIG. 8 is a conceptual diagram illustrating an embodiment of a time-frequency resource in a communication system.

Referring to FIG. 8, a resource configured with one symbol (e.g., an OFDM symbol) in the time domain and one subcarrier in the frequency domain may be defined as a 'resource element (RE)'. Resources configured with one OFDM symbol in the time domain and K subcarriers in the frequency domain may be defined as a 'resource element group (REG)'. One REG may include K REs. The REG may be used as a basic unit of resource allocation in the frequency domain. K may be a natural number. For example, K may be 12. N may be a natural number. N in the slot shown in FIG. 7 may be 14. The N OFDM symbols may be used as a basic unit of resource allocation in the time domain.

In the present disclosure, a RB may refer to a common RB (CRB). Alternatively, a RB may refer to a PRB or a virtual RB (VRB). In a communication system, a CRB may refer to a RB constituting a set of consecutive RBs (e.g.,

common RB grid) based on a reference frequency (e.g., point A). A carrier and/or bandwidth part may be arranged on the common RB grid. That is, a carrier and/or bandwidth part may be composed of CRB(s). A RB or a CRB constituting a bandwidth part may be referred to as a PRB, and a CRB index within the bandwidth part may be appropriately converted into a PRB index.

Downlink data may be transmitted through a PDSCH. A base station may transmit configuration information (e.g. scheduling information) of the PDSCH to a terminal through a PDCCH. The terminal may obtain the configuration information of the PDSCH by receiving the PDCCH (e.g. downlink control information (DCI)). For example, the configuration information of the PDSCH may include a modulation coding scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g. DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g. radio resource control (RRC) message). The configuration information for the PDCCH monitoring operation may include control resource set (CORESET) information and search space information.

The CORESET information may include PDCCH demodulation reference signal (DMRS) information, PDCCH precoding information, and PDCCH occasion information, and the like. A PDCCH DMRS may be a DMRS used for demodulating a PDCCH. A PDCCH occasion refers to a region where a PDCCH may potentially exist. That is, the PDCCH occasion may be a region where DCI may be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion may be indicated in RB units (e.g. in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure a bandwidth part (BWP) for downlink communication. The BWP may be configured differently for each terminal. The base station may notify the terminal of BWP configuration information using higher-layer signaling. The higher-layer signaling may refer to a transmission operation of system information and/or a transmission operation of RRC message. The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, a medium access control (MAC) control element (CE), or DCI. The base station may perform downlink communication using the activated BWP(s). The terminal may identify the activated BWP(s) by receiving the configuration information from the base station and perform downlink reception operations on the activated BWP(s).

The multiple transmission and reception point (mTRP) technology in 5G NR refers to a technique the enables a base station (e.g., a gNB) to communicate with a terminal by using physically separated multiple TRPs. By using a plurality of TRPs, the MTRP technique may solve the problem that the quality of service (QoS) is degraded since a terminal located at a cell edge is far away from a base station, as well as the problem of inter-cell interference received from base stations located in different cells. In addition, the MTRP technique may provide an additional communication path from a base station as a non line-of-sight (LOS) path in a millimeter wave band where an LOS path from the base station is limited.

In standards, the MTRP technique is categorized into a coherent joint transmission (CJT) scheme and a non-coherent joint transmission (NCJT) scheme. In the CJT scheme, TRPs cooperate in a synchronized manner based on a reliable backhaul link between base stations connected to the TRPs. On the other hand, in the NCJT scheme, scheduling, precoding matrix selection, modulation, and coding schemes are determined without coordination among two or more TRPs supporting a single terminal.

Beam management for a TRP in 5G NR may be defined as a set of L1/L2 procedures in which an optimal beam for transmission and reception at each of the TRP and a terminal is found or maintained. Beam management procedures may be broadly classified into four types as follows.

1) beam determination
2) beam measurement
3) beam reporting
4) beam sweeping

Here, the TRP and the UE may utilize the reciprocity characteristics of downlink (DL)/uplink (UL) channels during beam management. For example, the UE may utilize the values measured at the receive (Rx) beams of the DL channel when configuring the transmit (Tx) beam. In addition, the UE may utilize the values measured at the transmit (Tx) beams of the UL channel when configuring the receive (Rx) beam. Even in the case of the base station, these procedures for configuring the transmit beam and the receive beam may be performed in the same manner as in the UE. In particular, a transmission configuration indicator (TCI) has been introduced for beam management related to analog beamforming. The TCI may be used to configure a beam to be used for transmission of a specific channel and/or signal, for example, a PDSCH and/or CSI-RS and/or a PDCCH. The base station may dynamically indicate quasi-colocation (QCL) information to the UE by transmitting TCI through downlink control information (DCI).

When two antenna ports are quasi co-located, it means that the channel characteristic of a symbol delivered from one antenna port may be inferred through the channel of a symbol delivered from the other antenna port. Hereinafter, for convenience of description, two quasi co-located antenna ports will be considered being in a QCL relationship.

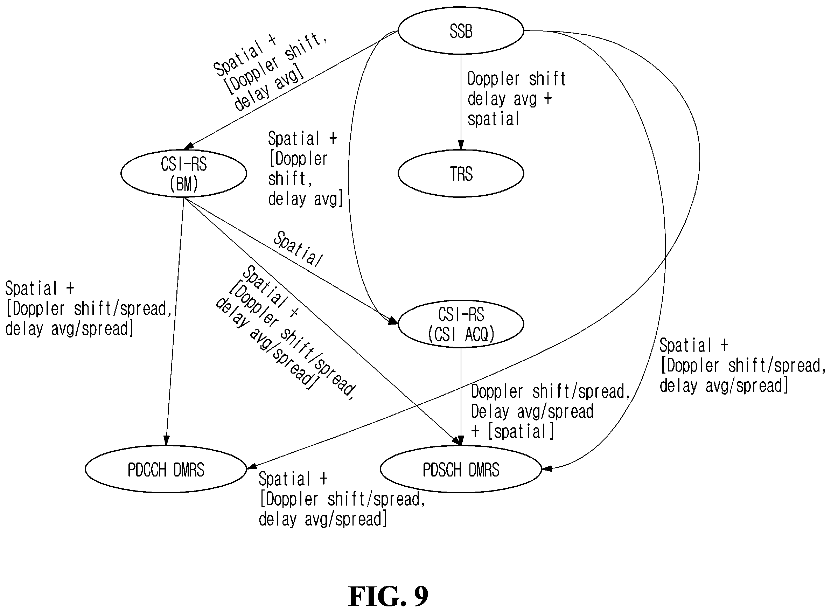

FIG. 9 illustrates an example of a QCL relationship between reference signals that are applicable to the present disclosure.

Referring to FIG. 9, information on a TCI state may be generated by extending and applying a QCL relationship between reference signals in systems below 5G.

A synchronization signal block (SSB) may be used for a terminal to be synchronized with a network and to obtain information. The SSB may be in a QCL relationship with a tracking reference signal (TRS). Accordingly, at least one of the doppler shift, delay average, and spatial characteristic of the SSB may be used to receive the TRS.

Channel state information-reference signal (CSI-RS): a CSI-RS may be used for a network to identify a characteristic of a wireless channel. There may be two types of CSI-RSs. A CSI-RS (CSI ACQ) may be used to receive CSI, and a CSI-RS (BM) may be used for beam management (BM).

An SSB and a CSI-RS (BM) may have a QCL relationship with a CSI-RS (CSI ACQ), and at least one of a doppler shift, a delay average, and a spatial characteristic may be utilized for receiving the CSI-RS (CSI ACK).

A CSI-RS (BM) and an SSB may have a QCL relationship with a physical downlink control channel demodulation reference signal (PDCCH DMRS), and at least one of a doppler shift/spread, an average/spread of delay, and a spatial characteristic may be used to receive the PDCCH DMRS.

An SSB, a CSI-RS (BM), and a CSI-RS(CSI ACQ) may have a QCL relationship with a PDSCH DMRS, and at least one of a doppler shift/spread, an average/spread of delay, and a spatial characteristic may be used to receive the PDCCH DMRS.

3GPP Release 17 introduced a unified TCI framework, that is, a method for TCI configuration using a unified TCI pool, to reduce signaling overhead for QCL configuration of DL and/or UL channels and to simplify multi-beam operation compared to previous releases prior to 3GPP Release 16.

According to the unified TCI framework, a base station may preconfigure a common TCI pool that may be commonly used (or applied) to both DL channels and UL channels, through RRC signaling. Further, according to the unified TCI framework, the base station may directly indicate the TCI for DL channels and UL channels from the configured common TCI pool by using a MAC-CE and/or DCI. In addition, according the unified TCI framework, the base station may support update for a common TCI state.

The common TCI state may be indicated (or configured) for a plurality of component carriers (CCs). Among the plurality of CCs, a reference CC may be additionally configured, and TCI updates for other CCs present in the indicated list may be performed simultaneously through a TCI update command for the reference CC.

Here, there are three methods of configuring the state of a TCI mainly for a DL channel and a UL channel.

    A. Joint TCI state indication method for common indication for DL/UL channels
    B. DL channel separate TCI state indication method that configures separate TCI for a DL channel
    C. Separate TCI state indication method for separate TCI state indication for an UL channel

From a broader perspective, the above three methods may be categorized into the joint TCI state indication method, in which a common TCI is indicated for both DL and UL channels, and the separate TCI state indication method, in which a TCI is individually configured for each of the DL channel or the UL channel. The fundamental difference between the two categorized methods may lie in whether reciprocity exists between the DL channel and the UL channel.

The unified TCI framework is designed for a single TRP (sTRP) in 3GPP Rel-17. However, in 3GGP Rel-18, the unified TCI framework aims to be extended to a multi-TRP (mTRP) system.

A TCI state may be used to deliver a QCL relationship to a terminal. The TCI state may include information on the QCL relationship and may be delivered through DCI. Section 5.1.5 of 3GPP TS 38.214 defines a procedure for delivering information regarding QCL as follows.

5.1.5 Antenna ports quasi co-location

The UE can be configured with a list of up to M TCI-State configurations within the higher layer parameter PDSCH-Config to decode PDSCH according to a detected PDCCH with DCI intended for the UE and the given serving cell, where M depends on the UE capability maxNumberConfiguredTCIstatesPerCC. Each TCI-State contains parameters for configuring a quasi co-location relationship between one or two downlink reference signals and the DM-RS ports of the PDSCH, the DM-RS port of PDCCH or the CSI-RS port(s) of a CSI-RS resource.

The quasi co-location relationship is configured by the higher layer parameter qcl-Type1 for the first DL RS, and qcl-Type2 for the second DL RS (if configured). For the case of two DL RSs, the QCL types shall not be the same, regardless of whether the references are to the same DL RS or different DL RSs. The quasi co-location types corresponding to each DL RS are given by the higher layer parameter qcl-Type in QCL-Info and may take one of the following values:

- 'typeA': {Doppler shift, Doppler spread, average delay, delay spread}

- 'typeB': {Doppler shift, Doppler spread}

- 'typeC': {Doppler shift, average delay}

- 'typeD': {Spatial Rx parameter}

The UE can be configured with a list of up to 128 TCI-State configurations, within the higher layer parameter dl-OrJointTCI-StateList in PDSCH-Config for providing a reference signal for the quasi co-location for DM-RS of PDSCH and DM-RS of PDCCH in a BWP/CC, for CSI-RS, and to provide a reference, if applicable, for determining UL TX spatial filter for dynamic-grant and configured-grant based PUSCH and PUCCH resource in a BWP/CC, and SRS. If the TCI-State or TCI-UL-State configurations are absent in a BWP of the CC, the UE can apply the TCI-State or TCI-UL-State configurations from a reference BWP of a reference CC configured by unifiedTCI-StateRef. The UE is not expected to be configured with tci-StatesToAddModList, SpatialRelationInfo or PUCCH-SpatialRelationInfo, except SpatialRelationInfoPos in a CC in a band, if the UE is configured with dl-OrJointTCI-StateList or ul-TCI-StateList in any CC in the same band. The UE can assume that when the UE is configured with tci-StatesToAddModList in any CC in the CC list configured by simultaneousTCI-UpdateList1-r16, simultaneousTCI-UpdateList2-r16, simultaneousSpatial-UpdatedList1-r16, or simultaneousSpatial-UpdatedList2-r16, the UE is not configured with dl-OrJointTCI-StateList or ul-TCI-StateList in any CC within the same band in the CC list.

The UE receives an activation command, as described in clause 6.1.3.xx of [10, TS 38.321], 6.1.3.47 of [10, TS 38.321] or 6.1.4.xx of [10, TS 38.321], used to map up to 8 TCI states and/or pairs of TCI states, with one TCI state for DL channels/signals and/or one TCI state for UL channels/signals to the codepoints of the DCI field 'Transmission Configuration Indication' for one or for a set of CCs/DL BWPs, [and/] or up to 8 sets of TCI states, where each set is comprised of up to two TCI state(s) for DL and UL signals/channels, or up to two TCI state(s) for DL channels/signals and up to two TCI state(s) for UL channels/signals to the codepoints of the DCI field "Transmission Configuration Indication' for one or for a set of CCs/DL BWPs, and if applicable, for one or for a set of CCs/UL BWPs. When a set of TCI state IDs are activated for a set of CCs/DL BWPs and if applicable, for a set of CCs/UL BWPs, where the applicable list of CCs is determined by the indicated CC in the activation command, the same set of TCI state IDs are applied for all DL and/or UL BWPs in the indicated CCs. If the activation command maps TCI-State(s) and/or TCI-UL-State(s) to only one TCI codepoint, the UE shall apply the indicated TCI-State(s) and/or TCI-UL-State(s) to one or to a set of CCs /DL BWPs, and if applicable, to one or to a set of CCs /UL BWPs once the indicated mapping for the one single TCI codepoint is applied as described in [11, TS 38.133].

When the bwp-id or cell for QCL-TypeA/D source RS in a QCL-Info of the TCI state is not configured, the UE assumes that QCL-TypeA/D source RS is configured in the CC/DL BWP where TCI state applies.

When tci-PresentInDCI is set as 'enabled' or tci-PresentDCI-1-2 is configured for the CORESET, a UE configured with dl-OrJointTCI-StateList with activated TCI-State or ul-TCI-StateList with activated TCI-UL-State receives DCI format 1_1/1_2/1_3 providing indicated TCI-State(s) and/or TCI-UL-State(s) for a CC or all CCs in the same CC list configured by simultaneousU-TCI-UpdateList1-r17, simultaneousU-TCI-UpdateList2-r17, simultaneousU-TCI-UpdateList3-r17, simultaneousU-TCI-UpdateList4-r17. The DCI format 1_1/1_2 can be with or without, if applicable, DL assignment. If the DCI format 1_1/1_2/ is without DL assignment, the UE can assume the following:

- CS-RNTI is used to scramble the CRC for the DCI

- The values of the following DCI fields are set as follows:

- RV = all '1's

- MCS = all '1's

- NDI = 0

(continued)

- Set to all '0's for FDRA Type 0, or all '1's for FDRA Type 1, or all '0's for dynamicSwitch (same as in Table 10.2-4 of [6, TS 38.213]).

After a UE receives an initial higher layer configuration of dl-OrJointTCI-StateList with more than one TCI-State and before application of an indicated TCI state from the configured TCI states:

- The UE assumes that DM-RS of PDSCH and DM-RS of PDCCH and the CSI-RS applying the indicated TCI state are quasi co-located with the SS/PBCH block the UE identified during the initial access procedure

After a UE receives an initial higher layer configuration of dl-OrJointTCI-StateList with more

than one TCI-State or ul-TCI-StateList with more than one TCI-UL-State and before application of an indicated TCI state from the configured TCI states:

- The UE assumes that the UL TX spatial filter, if applicable, for dynamic-grant and configured-grant based PUSCH and PUCCH, and for SRS applying the indicated TCI state, is the same as that for a PUSCH transmission scheduled by a RAR UL grant or a MsgA PUSCH transmission during the initial access procedure

After a UE receives a higher layer configuration of dl-OrJointTCI-StateList with more than one TCI-State as part of a Reconfiguration with sync procedure as described in [12, TS 38.331] and before applying an indicated TCI state from the configured TCI states:

- The UE assumes that DM-RS of PDSCH and DM-RS of PDCCH, and the CSI-RS applying the indicated TCI state are quasi co-located with the SS/PBCH block or the CSI-RS resource the UE identified during the random access procedure initiated by the Reconfiguration with sync procedure as described in [12, TS 38.331].

After a UE receives a higher layer configuration of dl-OrJointTCI-StateList with more than one TCI-State or more than one TCI-UL-State as part of a Reconfiguration with sync procedure as described in [12, TS 38.331] and before applying an indicated TCI state from the configured TCI states:

- The UE assumes that the UL TX spatial filter, if applicable, for dynamic-grant and configured-grant based PUSCH and PUCCH, and for SRS applying the indicated TCI state, is the same as that for a PUSCH transmission scheduled by a RAR UL grant or a MsgA PUSCH transmission during random access procedure initiated by the Reconfiguration with sync procedure as described in [12, TS 38.331].

If a UE receives a higher layer configuration of dl-OrJointTCI-StateList with a single TCI-State, that can be used as an indicated TCI state, the UE obtains the QCL assumptions from the configured TCI state for DM-RS of PDSCH and DM-RS of PDCCH, and the CSI -RS applying the indicated TCI state.

If a UE receives a higher layer configuration of dl-OrJointTCI-StateList with a single TCI-State or ul-TCI-StateList with a single TCI-UL-State, that can be used as an indicated TCI state, the UE determines an UL TX spatial filter, if applicable, from the configured TCI state for dynamic-grant and configured-grant based PUSCH and PUCCH, and SRS applying the indicated TCI state.

When a UE configured with dl-OrJointTCI-StateList would transmit a PUCCH with positive HARQ-ACK or a PUSCH with positive HARQ-ACK corresponding to the DCI carrying the

TCI State indication and without DL assignment, or corresponding to the PDSCH scheduled by the DCI carrying the TCI State indication, and if the indicated TCI State(s) is/are different from the previously indicated one(s), the indicated TCI-State(s) and/or TCI-UL-State(s) should be applied starting from the first slot that is at least *beamAppTime* symbols after the last symbol of the PUCCH or the PUSCH, and if the UE receives more than one indicated TCI state for a CC/BWP to be applied starting from the first slot that is at least *beamAppTime* symbols after the last symbol of the PUCCH or the PUSCH, the indicated TCI state carried in the latest DCI in time corresponding to positive HARQ-ACK value is applied. The first slot and the *beamAppTime* symbols are both determined on the active BWP with the smallest SCS among the BWP(s) from the CCs applying the indicated TCI-State(s) or TCI-UL-State(s) that are active at the end of the PUCCH or the PUSCH carrying the positive HARQ-ACK.

If a UE is configured with pdsch-TimeDomainAllocationListForMultiPDSCH in which one or more rows contain multiple SLIVs for PDSCH on a DL BWP of a serving cell, and the UE is receiving a DCI carrying the TCI-State indication and without DL assignment, the UE does not expect that the number of indicated SLIVs in the row of the pdsch-TimeDomainAllocationListForMultiPDSCH by the DCI is more than one.

If the UE is configured with SSB-MTC-AddtionalPCI and with PDCCH-Config that contains two different values of coresetPoolIndex in ControlResourceSet, the UE receives an activation command for CORESET associated with each coresetPoolIndex, as described in clause 6.1.3.14 of [10, TS 38.321] or 6.1.3.xx of [10, TS 38.321], used to map up to 8 TCI states and/or pairs of TCI states, with one TCI state for DL channels/signals and/or one TCI state for UL channels/signals to the codepoints of the DCI field 'Transmission Configuration Indication' in one CC/DL BWP. When a set of TCI state IDs are activated for a coresetPoolIndex, the activated TCI states corresponding to one coresetPoolIndex is associated with the serving cell physical cell ID and activated TCI states corresponding to another coresetPoolIndex can be associated with another physical cell ID.

(continued)

When a UE supports two TCI states in a codepoint of the DCI field 'Transmission Configuration Indication' the UE may receive an activation command, as described in clause 6.1.3.24 of [10, TS 38.321], the activation command is used to map up to 8 combinations of one or two TCI states to the codepoints of the DCI field 'Transmission Configuration Indication'. The UE is not expected to receive more than 8 TCI states in the activation command.

When the DCI field 'Transmission Configuration Indication' is present in DCI format 1_2 and when the number of codepoints S in the DCI field 'Transmission Configuration Indication' of

DCI format 1_2 is smaller than the number of TCI codepoints that are activated by the activation command, as described in clause 6.1.3.14, 6.1.3.24 and 6.1.3.47 of [10, TS38.321], only the first S activated codepoints are applied for DCI format 1_2.

When the UE would transmit a PUCCH with HARQ-ACK information in slot n corresponding to the PDSCH carrying the activation command, the indicated mapping between TCI states and codepoints of the DCI field 'Transmission Configuration Indication' should be applied starting from the first slot that is after slot

$$n + 3N_{slot}^{subframe,\mu} + \frac{2^\mu}{2^{\mu_{Kmac}}} \cdot k_{\mathrm{mac}}$$ where m is the SCS configuration for the PUCCH and $\mu_{K_{mac}}$ is the subcarrier spacing configuration for $k_{mac}$ with a value of 0 for frequency range 1, and $k_{mac}$ is provided by K-Mac or $k_{mac} = 0$ if K-Mac is not provided. If tci-PresentInDCI is set to 'enabled' or tci-PresentDCI-1-2 is configured for the CORESET scheduling the PDSCH, and the time offset between the reception of the DL DCI and the corresponding PDSCH is equal to or greater than timeDurationForQCL if applicable, after a UE receives an initial higher layer configuration of TCI states and before reception of the activation command, the UE may assume that the DM-RS ports of PDSCH of a serving cell are quasi co-located with the SS/PBCH block determined in the initial access procedure with respect to qcl-Type set to 'typeA', and when applicable, also with respect to qcl-Type set to 'typeD'.

If a UE is configured with the higher layer parameter tci-PresentInDCI that is set as 'enabled' for the CORESET scheduling a PDSCH, the UE assumes that the TCI field is present in the DCI format 1_1 or format 1_3 of the PDCCH transmitted on the CORESET. If a UE is configured with the higher layer parameter tci-PresentDCI-1-2 for the CORESET scheduling the PDSCH, the UE assumes that the TCI field with a DCI field size indicated by tci-PresentDCI-1-2 is present in the DCI format 1_2 of the PDCCH transmitted on the CORESET. If a UE is configured with the higher layer parameter tci-PresentInDCI that is set as 'enabled' for the CORESET scheduling the multicast PDSCH, the UE assumes that the TCI field is present in the DCI format 4_2 of the PDCCH transmitted on the CORESET. If the PDSCH is scheduled by a DCI format not having the TCI field present, and the time offset between the reception of the DL DCI and the corresponding PDSCH of a serving cell is equal to or greater than a threshold timeDurationForQCL if applicable, where the threshold is based on reported UE capability [13, TS 38.306], for determining PDSCH antenna port quasi co-location, the UE assumes that the TCI state or the QCL assumption for the PDSCH is identical to the TCI state or QCL assumption whichever is applied for the CORESET used for the PDCCH transmission within the active BWP of the serving cell.

When a UE is configured with both sfnSchemePDCCH and sfnSchemePDSCH scheduled by DCI format 1_0 or by DCI format 1_1/1_2, if the time offset between the reception of the DL

DCI and the corresponding PDSCH of a serving cell is equal to or greater than a threshold timeDurationForQCL if applicable:

- if the UE supports sfn-DefaultDL-BeamSetup-r17 for DCI scheduling without TCI field, the UE assumes that the TCI state(s) or the QCL assumption(s) for the PDSCH is identical to the TCI state(s) or QCL assumption(s) whichever is applied for the CORESET used for the reception of the DL DCI within the active BWP of the serving cell regardless of the number of active TCI states of the CORESET. If the UE does not support sfn-SchemeA-DynamicSwitching-r17 or sfn-SchemeB-DynamicSwitching-r17, the UE should be activated with the CORESET with two TCI states.

- else if the UE does not support sfn-DefaultDL-BeamSetup-r17 for DCI scheduling without TCI field, the UE shall expect TCI field present when scheduled by DCI format 1_1/1_2. When a UE is configured with sfnSchemePDSCH and sfnSchemePDCCH is not configured, when scheduled by DCI format 1_1/1_2, if the time offset between the reception of the DL DCI and the corresponding PDSCH of a serving cell is equal to or greater than a threshold timeDurationForQCL if applicable, the UE shall expect TCI field present.

(continued)

For PDSCH scheduled by DCI format 1_0, 1_1, 1_2, when a UE is configured with sfnSchemePDCCH set to 'sfnSchemeA' and sfnSchemePDSCH is not configured, and there is no TCI codepoint with two TCI states in the activation command, and if the time offset between the reception of the DL DCI and the corresponding PDSCH is equal or larger than the threshold timeDurationForQCL if applicable and the CORESET which schedules the PDSCH is indicated with two TCI states, the UE assumes that the TCI state or the QCL assumption for the PDSCH is identical to the first TCI state or QCL assumption which is applied for the CORESET used for the PDCCH transmission within the active BWP of the serving cell.

If a PDSCH is scheduled by a DCI format having the TCI field present, the TCI field in DCI in the scheduling component carrier points to the activated TCI states in the scheduled component carrier or DL BWP, the UE shall use the TCI-State according to the value of the "Transmission Configuration Indication' field in the detected PDCCH with DCI for determining PDSCH antenna port quasi co-location. The UE may assume that the DM-RS ports of PDSCH of a serving cell are quasi co-located with the RS(s) in the TCI state with respect to the QCL type parameter(s) given by the indicated TCI state if the time offset between the reception of the DL DCI and the corresponding PDSCH is equal to or greater than a threshold timeDurationForQCL, where the threshold is based on reported UE capability [13, TS 38.306]. For a single slot PDSCH, the indicated TCI state(s) should be based on the activated TCI states in the slot with the scheduled PDSCH. For a multi-slot PDSCH or the UE is configured with higher layer

parameter pdsch-TimeDomainAllocationListForMultiPDSCH, the indicated TCI state(s) should be based on the activated TCI states in the first slot with the scheduled PDSCH(s), and UE shall expect the activated TCI states are the same across the slots with the scheduled PDSCH(s). When the UE is configured with CORESET associated with a search space set for cross-carrier scheduling and the UE is not configured with enableDefaultBeamForCCS, the UE expects tci-PresentInDCI is set as 'enabled' or tci-PresentDCI-1-2 is configured for the CORESET, and if one or more of the TCI states configured for the serving cell scheduled by the search space set contains qcl-Type set to 'typeD', the UE expects the time offset between the reception of the detected PDCCH in the search space set and a corresponding PDSCH is larger than or equal to the threshold timeDurationForQCL.

Independent of the configuration of tci-PresentInDCI and tci-PresentDCI-1-2 in RRC connected mode, if the UE is not provided dl-OrJointTCI-StateList-r17, and if the offset between the reception of the DL DCI and the corresponding PDSCH is less than the threshold timeDurationForQCL and at least one configured TCI state for the serving cell of scheduled PDSCH contains qcl-Type set to 'typeD',

- the UE may assume that the DM-RS ports of PDSCH(s) of a serving cell are quasi co-located with the RS(s) with respect to the QCL parameter(s) used for PDCCH quasi co-location indication of the CORESET associated with a monitored search space with the lowest controlResourceSetId in the latest slot in which one or more CORESETs within the active BWP of the serving cell are monitored by the UE. In this case, if the qcl-Type is set to 'typeD' of the PDSCH DM-RS is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers).

- If a UE is configured with enableDefaultTCI-StatePerCoresetPoolIndex and the UE is configured by higher layer parameter PDCCH-Config that contains two different values of coresetPoolIndex in different ControlResourceSets,
- the UE may assume that the DM-RS ports of PDSCH associated with a value of coresetPoolIndex of a serving cell are quasi co-located with the RS(s) with respect to the QCL parameter(s) used for PDCCH quasi co-location indication of the CORESET associated with a monitored search space with the lowest controlResourceSetId among CORESETs, which are configured with the same value of coresetPoolIndex as the PDCCH scheduling that PDSCH, in the latest slot in which one or more CORESETs associated with the same value of coresetPoolIndex as the PDCCH scheduling that PDSCH within the active BWP of the serving

cell are monitored by the UE. In this case, if the 'QCL-TypeD' of the PDSCH DM-RS is different from that of the PDCCH DM-RS with which they overlap in at least one symbol and they are associated with same value of coresetPoolIndex, the UE is expected to prioritize the reception of PDCCH associated with that CORESET. This also applies to the intra-band CA case (when PDSCH and the CORESET are in different component carriers).

- If a UE is configured with enableTwoDefaultTCI-States, and at least one TCI codepoint indicates two TCI states, the UE may assume that the DM-RS ports of PDSCH or PDSCH transmission occasions of a serving cell are quasi co-located with the RS(s) with respect to the QCL parameter(s) associated with the TCI states corresponding to the lowest codepoint among the TCI codepoints containing two different TCI states. When the UE is configured by higher layer parameter repetitionScheme set to 'tdmSchemeA' or is configured with higher layer parameter repetitionNumber, and the offset between the reception of the DL DCI and the first PDSCH transmission occasion is less than the threshold timeDurationForQCL, the mapping of the TCI states to PDSCH transmission occasions is determined according to clause 5.1.2.1 by replacing the indicated TCI states with the TCI states corresponding to the lowest codepoint among the TCI codepoints containing two different TCI states based on the activated TCI states in the slot with the first PDSCH transmission occasion. In this case, if the 'QCL-TypeD' in both of the TCI states corresponding to the lowest codepoint among the TCI codepoints containing two different TCI states is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers)

- If a UE is not configured with sfnSchemePDSCH, and the UE is configured with sfnSchemePDCCH set to 'sfnSchemeA' and there is no TCI codepoint with two TCI states in the activation command and the CORESET with the lowest ID in the latest slot is indicated with two TCI states, the UE may assume that the DM-RS ports of PDSCH of a serving cell are quasi co-located with the RS(s) with respect to the QCL parameter(s) associated with the first TCI state of two TCI states indicated for the CORESET. In this case, if the qcl-Type is set to 'typeD' of the PDSCH DM-RS is different from that of the PDCCH DM-RS with which they overlap in at least one symbol, the UE is expected to prioritize the reception of PDCCH associated with that CORESET with single active TCI state. This also applies to the intra-band CA case (when PDSCH and the CORESET are in different component carriers).

- In all cases above, if none of configured TCI states for the serving cell of scheduled PDSCH is configured with qcl-Type set to 'typeD', the UE shall obtain the other QCL

assumptions from the indicated TCI state(s) for its scheduled PDSCH irrespective of the time offset between the reception of the DL DCI and the corresponding PDSCH.

Independent of the configuration of tci-PresentInDCI and tci-PresentDCI-1-2 in RRC connected mode, if the UE is provided dl-OrJointTCI-StateList-r17, and if the offset between the reception of the DL DCI and the corresponding PDSCH is less than the threshold timeDurationForQCL and at least one configured TCI state for the serving cell of scheduled PDSCH contains qcl-Type set to 'typeD', regardless of configuration of followUnifiedTCI-State,

- if the indicated TCI state is associated with the PCI of the serving cell, the indicated TCI state is applied to PDSCH reception.

- if the indicated TCI state is associated with a PCI different from the serving cell, the UE may assume that the DM-RS ports of PDSCH(s) of a serving cell are quasi co-located with the RS(s) with respect to the QCL parameter(s) used for PDCCH quasi co-location indication of the CORESET associated with a monitored search space with the lowest controlResourceSetId in the latest slot in which one or more CORESETs within the active BWP of the serving cell are monitored by the UE. In the CA case, if the 'QCL-TypeD' of the PDSCH DM-RSs from respective CCs in a band are different in a slot, the QCL-TypeD assumption of the PDSCH DM-RS in the CC with lowest CC ID in the band is applied to all the PDSCH DM-RSs in the CCs in the band. In this case, if the qcl-Type is set to 'typeD' of the PDSCH DM-RS is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers).

If the PDCCH carrying the scheduling DCI is received on one component carrier, and a PDSCH scheduled by that DCI is on another component carrier:

- The timeDurationForQCL is determined based on the subcarrier spacing of the scheduled PDSCH. If $\mu PDCCH <$ $\mu PDSCH$ an additional timing delay $d \dfrac{2^{\mu_{PDSCH}}}{2^{\mu_{PDCCH}}}$ is added to the timeDurationForQCL, where d is defined in 5.2.1.5.1a-1, otherwise d is zero;

- When the UE is configured with enableDefaultBeamForCCS, if the offset between the reception of the DL DCI and the corresponding PDSCH is less than the threshold timeDurationForQCL, or if the DL DCI does not have the TCI field present, the UE obtains its QCL assumption for the scheduled PDSCH from the activated TCI state with the lowest ID applicable to PDSCH in the active BWP of the scheduled cell.

A UE that has indicated a capability beamCorrespondenceWithoutUL-BeamSweeping set to 'supported', as described in [13, TS 38.306], can determine a spatial domain filter to be used while performing the applicable channel access procedures described in [16, TS 37.213] prior

(continued)

to a UL transmission on the channel as follows:

- if UE is indicated with an SRI corresponding to the UL transmission, the UE may use a spatial domain filter that is same as the spatial domain transmission filter associated with the indicated SRI,

- if UE is configured with SRS-spatialRelationInfo for the UL transmission, the UE may use a spatial domain filter that is same as the spatial domain filter associated with referenceSignal in the corresponding SRS-spatialRelationInfo,

- if UE is configured with TCI-State in dl-OrJointTCI-StateList or TCI-UL-State in ul-TCI-StateList, the UE may use a spatial domain filter that is same as the spatial domain receive filter the UE may use to receive the DL reference signal associated with the indicated TCI state.

When the PDCCH reception includes two PDCCH from two respective search space sets, as described in clause 10.1 of [6, TS 38.213], for the purpose of determining the time offset between the reception of the DL DCI and the corresponding PDSCH, the PDCCH candidate that ends later in time is used. When the PDCCH reception includes two PDCCH candidates from two respective search space sets, as described in clause 10.1 of [6, TS 38.213], for the configuration of tci-PresentInDCI or tci-PresentDCI-1-2, the UE expects the same configuration in the first and second CORESETs associated with the two PDCCH candidates; and if the PDSCH is scheduled by a DCI format not having the TCI field present and if the scheduling offset is equal to or larger than timeDurationForQCL, if applicable, PDSCH QCL assumption is based on the CORESET with lower ID among the first and second CORESETs associated with the two PDCCH candidates.

For a periodic CSI-RS resource in an NZP-CSI-RS-ResourceSet configured with higher layer parameter trs-Info, the UE shall expect that a TCI-State indicates one of the following quasi colocation type(s):

- 'typeC' with an SS/PBCH block and, when applicable, 'typeD' with the same SS/PBCH block where SS/PBCH block may have a PCI different from the PCI of the serving cell. The UE can assume center frequency, SCS, SFN offset are the same for SS/PBCH block from the serving cell and SS/PBCH block having a PCI different from the serving cell, or

- 'typeC' with an SS/PBCH block and, when applicable,'typeD' with a CSI-RS resource in an NZP-CSI-RS-ResourceSet configured with higher layer parameter repetition, where SS/PBCH block may have a PCI different from the PCI of the serving cell. The UE can assume center frequency, SCS, SFN offset are the same for SS/PBCH block from the serving cell and SS/PBCH block having a PCI different from the serving cell.

For periodic/semi-persistent CSI-RS, if the UE is configured with dl-OrJointTCI-StateList, the UE can assume that the indicated TCI-State is not applied.

For an aperiodic CSI-RS resource in an NZP-CSI-RS-ResourceSet configured with higher layer parameter trs-Info, the UE shall expect that a TCI-State indicates qcl-Type set to 'typeA' with a periodic CSI-RS resource in a NZP-CSI-RS-ResourceSet configured with higher layer parameter trs-Info and, when applicable, qcl-Type set to 'typeD' with the same periodic CSI-RS resource.

For a CSI-RS resource in an NZP-CSI-RS-ResourceSet configured without higher layer parameter trs-Info and without the higher layer parameter repetition, the UE shall expect that a TCI-State indicates one of the following quasi co-location type(s):

- 'typeA' with a CSI-RS resource in a NZP-CSI-RS-ResourceSet configured with higher layer parameter trs-Info and, when applicable, 'typeD' with the same CSI-RS resource, or

- 'typeA' with a CSI-RS resource in a NZP-CSI-RS-ResourceSet configured with higher layer parameter trs-Info and, when applicable, 'typeD' with an SS/PBCH block, where SS/PBCH block may have a PCI different from the PCI of the serving cell. The UE can assume center frequency, SCS, SFN offset are the same for SS/PBCH block from the serving cell and SS/PBCH block having a PCI different from the serving cell, or

- 'typeA' with a CSI-RS resource in a NZP-CSI-RS-ResourceSet configured with higher layer parameter trs-Info and, when applicable, 'typeD' with a CSI-RS resource in a NZP-CSI-RS-ResourceSet configured with higher layer parameter repetition, or

- 'typeB' with a CSI-RS resource in a NZP-CSI-RS-ResourceSet configured with higher layer parameter trs-Info when 'typeD' is not applicable.

For a CSI-RS resource in an NZP-CSI-RS-ResourceSet configured with higher layer parameter repetition, the UE shall expect that a TCI-State indicates one of the following quasi co-location type(s):

- 'typeA' with a CSI-RS resource in a NZP-CSI-RS-ResourceSet configured with higher layer parameter trs-Info and, when applicable, 'typeD' with the same CSI-RS resource, or

- 'typeA' with a CSI-RS resource in a NZP-CSI-RS-ResourceSet configured with higher layer parameter trs-Info and, when applicable, 'typeD' with a CSI-RS resource in a NZP-CSI-RS-ResourceSet configured with higher layer parameter repetition, or

(continued)

- 'typeC' with an SS/PBCH block and, when applicable, 'typeD' with the same SS/PBCH block, the reference RS may additionally be an SS/PBCH block having a PCI different from the PCI of the serving cell. The UE can assume center frequency, SCS, SFN offset are the same for SS/PBCH block from the serving cell and SS/PBCH block having a PCI different from the serving cell.

For the DM-RS of PDCCH, if the UE is not configured with dl-OrJointTCI-StateList, the UE shall expect that a TCI-State indicates one of the following quasi co-location type(s):

- 'typeA' with a CSI-RS resource in a NZP-CSI-RS-ResourceSet configured with higher layer parameter trs-Info and, when applicable, 'typeD' with the same CSI-RS resource, or

- 'typeA' with a CSI-RS resource in a NZP-CSI-RS-ResourceSet configured with higher layer parameter trs-Info and, when applicable, 'typeD' with a CSI-RS resource in an NZP-CSI-RS-ResourceSet configured with higher layer parameter repetition, or

- 'typeA' with a CSI-RS resource in a NZP-CSI-RS-ResourceSet configured without higher layer parameter trs-Info and without higher layer parameter repetition and, when applicable, 'typeD' with the same CSI-RS resource.

When a UE is configured with sfnSchemePdcch set to 'sfnSchemeA', and CORESET is activated with two TCI states, the UE shall assume that the DM-RS port(s)of the PDCCH in the CORESET is quasi co-located with the DL-RSs of the two TCI states. When a UE is configured with sfnSchemePdcch set to 'sfnSchemeB', and a CORESET is activated with two TCI states, the UE shall assume that the DM-RS port(s)of the PDCCH is quasi co-located with the DL-RSs of the two TCI states except for quasi co-location parameters {Doppler shift, Doppler spread} of the second indicated TCI state.

When a UE is configured by higher layer parameter cjtSchemePDSCH and dl-OrJointTCI-StateList and is indicated with two TCI-States applied for PDSCH reception and reports [support for two joint TCI states for PDSCH-CJT]:

- if the UE is configured with cjtSchemeA, the UE assumes that PDSCH DM-RS port(s) are QCLed with the DL RSs of both indicated TCI-States with respect to QCL-TypeA.

- if the UE is configured with cjtSchemeB, the UE assumes that PDSCH DM-RS port(s) are QCLed with the DL RSs of both indicated TCI-States with respect to QCL-TypeA except for QCL parameters {Doppler shift, Doppler spread} of the second indicated joint TCI state. For the DM-RS of PDSCH, if the UE is not configured with dl-OrJointTCI-StateList, the UE shall expect that a TCI-State indicates one of the following quasi co-location type(s):

- 'typeA' with a CSI-RS resource in a NZP-CSI-RS-ResourceSet configured with higher layer parameter trs-Info and, when applicable, 'typeD' with the same CSI-RS resource, or

- 'typeA' with a CSI-RS resource in a NZP-CSI-RS-ResourceSet configured with higher layer parameter trs-Info and, when applicable, 'typeD' with a CSI-RS resource in an NZP-CSI-RS-ResourceSet configured with higher layer parameter repetition,or

- typeA' with a CSI-RS resource in a NZP-CSI-RS-ResourceSet configured without higher layer parameter trs-Info and without higher layer parameter repetition and, when

applicable, 'typeD' with the same CSI-RS resource.

For the DM-RS of PDCCH, if the UE is configured with dl-OrJointTCI-StateList, the UE shall expect that an indicated TCI-State indicates one of the following quasi co-location type(s):

- 'typeA' with a CSI-RS resource in a NZP-CSI-RS-ResourceSet configured with higher layer parameter trs-Info and, when applicable, 'typeD' with the same CSI-RS resource, or

- 'typeA' with a CSI-RS resource in a NZP-CSI-RS-ResourceSet configured with higher layer parameter trs-Info and, when applicable, 'typeD' with a CSI-RS resource in an NZP-CSI-RS-ResourceSet configured with higher layer parameter repetition.

For the DM-RS of PDSCH, if the UE is configured with dl-OrJointTCI-StateList, the UE shall expect that an indicated TCI-State indicates one of the following quasi co-location type(s):

- 'typeA' with a CSI-RS resource in a NZP-CSI-RS-ResourceSet configured with higher layer parameter trs-Info and, when applicable, 'typeD' with the same CSI-RS resource, or

- 'typeA' with a CSI-RS resource in a NZP-CSI-RS-ResourceSet configured with higher layer parameter trs-Info and, when applicable, 'typeD' with a CSI-RS resource in an NZP-CSI-RS-ResourceSet configured with higher layer parameter repetition.

(continued)

When a UE is configured with sfnSchemePDSCH set to 'sfnSchemeA', and the UE is indicated with two TCI states in a codepoint of the DCI field 'Transmission Configuration Indication' in a DCI scheduling a PDSCH, the UE shall assume that the DM-RS port(s)of the PDSCH is quasi co-located with the DL-RSs of the two TCI states. When a UE is configured with sfnSchemePDSCH set to 'sfnSchemeB', and the UE is indicated with two TCI states in a codepoint of the DCI field 'Transmission Configuration Indication' in a DCI scheduling a PDSCH, the UE shall assume that the DM-RS port(s)of the PDSCH is quasi co-located with the DL-RSs of the two TCI states except for quasi colocation parameters {Doppler shift, Doppler spread} of the second indicated TCI state.

When a UE is configured with dl-OrJointTCI-StateList or TCI-UL-State and is configured by higher layer parameter PDCCH-Config that contains two different values of coresetPoolIndex in ControlResourceSet, an indicated TCI state is specific to a coresetPoolIndex value, when it is indicated by the DCI field 'Transmission Configuration Indication' in DCI format 1_1/1_2 associated with the coresetPoolIndex value.

When a UE is configured with dl-OrJointTCI-StateList and is having two indicated TCI-states, if the UE does not report its capability of [two default beams for S-DCI based MTRP] in frequency range 2 and when the offset between the reception of the scheduling/activation DCI format 1_0/1_1/1_2 and the scheduled or activated PDSCH reception is less than [timeDurationForQCL] in frequency range 2, the UE shall apply the first indicated TCI-State to the scheduled or activated PDSCH reception.

When a UE is configured with dl-OrJointTCI-StateList, is configured by higher layer parameter PDCCH-Config that contains two different values of coresetPoolIndex in ControlResourceSet, if the UE does not report its capability of [default beam per coresetPoolIndex for M-DCI based MTRP] in frequency range 2

- when the offset between the reception of the scheduling/activation DCI format 1_0/1_1/1_2 in a CORESET associated with coresetPoolIndex value 0 and the scheduled or activated PDSCH reception is less than [timeDurationForQCL] in frequency range 2, the UE shall apply the indicated joint/DL TCI state specific to coresetPoolIndex value 0 to the scheduled or activated PDSCH reception.

- the UE does not expect that the offset between reception of the scheduling/activation DCI format 1_0/1_1/1_2 in a CORESET associated with coresetPoolIndex value 1 and scheduled or activated PDSCH reception is less than [timeDurationForQCL] in frequency range 2.

When a UE is configured with dl-OrJointTCI-StateList and is having two indicated TCI-states:

- Regardless of the offset between the reception of the scheduling DCI format 1_0/1_1/1_2 and the scheduled/activated PDSCH reception, if the UE is in frequency range 1, or the UE reports its capability of [two default beams for S-DCI based MTRP] in frequency range 2, or

- If the UE does not report its capability of [two default beams for S-DCI based MTRP]in frequency range 2 and if the scheduling offset between the reception of the scheduling DCI format 1_0/1_1/1_2 and the scheduled/activated PDSCH reception is equal to or larger than [timeDurationForQCL]

- The UE can be configured by higher layer parameter applyIndicatedTCIState to indicate whether the first, the second, or both of the indicated TCI-state(s) is/are applied to PDSCH reception scheduled or activated by DCI format 1_0. The UE can be configured with applyIndicatedTCIState with value both only when the UE is configured with cjtSchemePDSCH and the UE reports [support for two joint TCI states for PDSCH-CJT] or the UE is configured with sfnSchemePdsch. In that case, the UE shall apply both indicated TCI-states to PDSCH reception scheduled or activated by DCI format 1_0 on a search space other than Type0/0A/2 CSS on CORESET#0.

- If the UE is not configured with applyIndicatedTCIState, the first indicated TCI-state is applied to PDSCH reception scheduled or activated by DCI format 1_0.

- When the UE is configured with tciSelection-PresentInDCI jointly for both DCI formats 1_1 and 1_2 in the same DL BWP, and when the UE receives a DCI format 1_1/1_2 that schedules or activates PDSCH reception, the UE shall determine the indicated joint/DL TCI state(s) for the PDSCH reception according to the following:

- If the DCI format 1_1/1_2 indicates codepoint "00" for the [TCI selection field], the UE shall apply the first one of two indicated joint/DL TCI states to all PDSCH DM-RS port(s) of corresponding PDSCH transmission occasion(s) scheduled or activated by the DCI format 1_1/1_2.

- If the DCI format 1_1/1_2 indicates codepoint "01" for the [TCI selection field], the UE shall apply the second one of two indicated joint/DL TCI states to all PDSCH DM-RS port(s) of corresponding PDSCH transmission occasion(s) scheduled or activated by the DCI format 1_1/1_2.

- If the DCI format 1_1/1_2 indicates codepoint "10" for the [TCI selection field], the UE shall apply both indicated joint/DL TCI states to the PDSCH reception scheduled or activated by the DCI format 1_1/1_2.

(continued)

> - If the UE is not configured with tciSelection-PresentInDCI and when the UE receives a DCI format 1_1/1_2 that schedules/activates PDSCH reception, the UE shall apply both indicated TCI-States to the scheduled or activated PDSCH reception.

As described above, a UE may be configured with a list of TCI-state configurations through higher layer parameters (e.g., PDSCH-Config). The UE may decode a PDSCH using the list of TCI-state configurations. Each TCI state may include a parameter for configuring a QCL relationship between one or two DL reference signals and a DM-RS port of a PDSCH, a DM-RS port of a PDCCH, or a CSI-RS port of a CSI-RS resource. QCL may be configured for a first DL RS using a higher layer parameter qcl-Type 1 and may be configured using qcl-Type 2 for a second DL RS. The QCL type of each of the two DL RSs may be differently configured irrespective of whether the DL RSs have the same reference or different references. A QCL type corresponding to each DL RS may be configured by a higher layer parameter (e.g., qcl-Type in QCL-Info). The QCL type may have one of the following values.

- typeA: {Doppler shift, Doppler spread, average delay, delay spread}
- typeB: {Doppler shift, Doppler spread}
- typeC: {Doppler shift, average delay}
- typeD: {Spatial Rx parameter}

Here, Spatial RX parameter may refer to any one of various parameters including an angle of arrival (AoA), a power angular spectrum (PAS) of AoA, an angle of departure (AoD), a PAS of AoD, a transmit/receive channel correlation, transmit/receive beamforming, and a spatial channel correlation.

A base station may transmit configuration information to a terminal via higher layer signaling regarding whether to apply information of a TCI field included in DCI.

In addition, the terminal may receive information on TCI states or pairs of TCI states. As an example, the base station may deliver a plurality of TCI states to the terminal through RRC signaling, and a portion of the TCI states may be configured as TCI states for CORESET. The terminal may receive an activation command. The activation command may be used to map a TCI state (or TCI states) and/or a pair (or pairs) of TCI states to a code point of DCI field 'transmission configuration indication'.

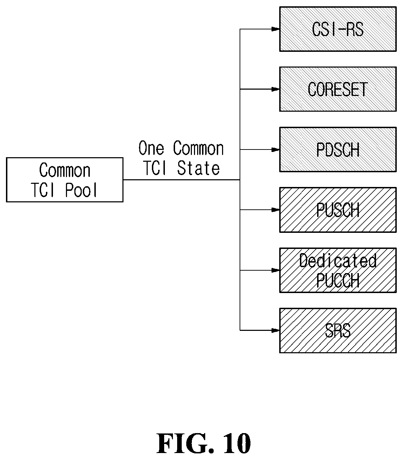

In addition, as shown in FIG. 10 below, a unified beam may be configured for a plurality of channels or reference signals through a unified TCI state.

The base station may deliver beam configuration information regarding a CSI-RS, a CORESET, a PDSCH, a PUSCH, a PUCCH, and an SRS to the terminal through the unified TCI state, without needing to deliver a TCI state for each channel individually. Whether to activate the unified TCI state may be implicitly delivered to the terminal. As an example, when TCI-State or TCI-UL-State configuration is not present for the BWP of a CC, the terminal may apply the TCI-State or TCI-UL-State configuration from the reference BWP of a reference CC configured by the unified TCI-StateRef.

A multiple transmission and reception point (M-TRP) technique, in which communication is performed through a plurality of transmission and reception nodes, may be provided. The M-TRP technique may be categorized into a single downlink control information (S-DCI) technique, in which transmission and reception via multiple nodes are controlled through a single piece of control information, and a multiple downlink control information (M-DCI) technique, in which information for each node is delivered separately. Additionally, the procedure for delivering TCI information may vary depending on whether the TCI information for uplink and downlink is configured separately or jointly.

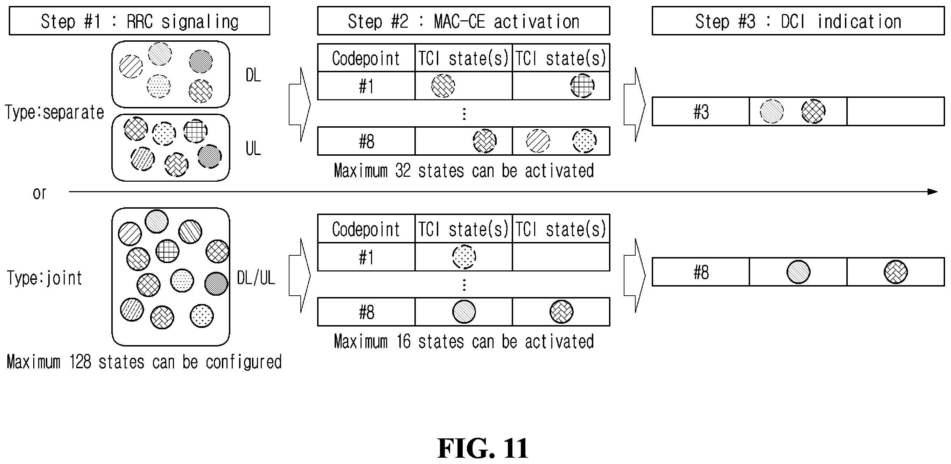

FIG. 11 illustrates an example of a procedure of configuring each layer for delivering a TCI state in an M-TRP structure according to an embodiment of the present disclosure.

First, configuration types related to a TCI are classified into a separate type and a joint type. The separate type is a scheme in which a TCI state is configured through a separate list of TCI states for uplink and downlink, and the joint type is a scheme in which a TCI state is configured through a joint list of TCI states for uplink and downlink. A base station may deliver a configuration type related to a unified TCI to a terminal through unifiedTCI-StateType in ServingCellConfig. In addition, the base station may deliver information on a set of resources related to a reference signal to the terminal through PDSCH-Config, and the PDSCH-Config may be included in a BWP-Downlink IE.

In addition, the terminal may be configured with a list of up to 128 TCI state configurations through a higher layer parameter (e.g., dl-OrJointTCI-StateList in PDSCH-Config). A TCI configuration list may be used to provide a criterion for determining a ULTX space filter for dynamic-grant and configuration-grant-based PUSCH and PUCCH resources and an SRS in a BWP/CC.

Activated TCI state configurations among the TCI state configurations may be delivered through a TCI state activation/inactivation MAC CE. A unified TCI state activation/inactivation MAC CE may be defined as follows.

6.1.3.47 Unified TCI States Activation/Deactivation MAC CE

The Unified TCI States Activation/Deactivation MAC CE is identified by a MAC subheader with eLCID as specified in Table 6.2.1-1b. It has a variable size consisting of following fields:

- CORESET Pool ID: This field indicates that the mapping between the activated TCI states and the codepoint of the DCI Transmission Configuration Indication set by field TCI state ID is specific to the ControlResourceSetId configured with CORESET Pool ID as specified in TS 38.331 [5]. This field set to 1 indicates that the TCI states are specified to CORESET pool ID equal to 1, otherwise the TCI states are specified to CORESET pool ID equal to 0. If the coresetPoolIndex is not configured for any CORESET or only one coresetPoolIndex is configured for any CORESET, the R bit is present instead;

- Serving Cell ID: This field indicates the identity of the Serving Cell for which the MAC CE applies. The length of the field is 5 bits. If the indicated Serving Cell is configured as part of a simultaneousU-TCI-UpdateList1, simultaneousU-TCI-UpdateList2, simultaneousU-TCI-UpdateList3 or simultaneousU-TCI-UpdateList4 as specified in TS 38.331 [5], this MAC CE applies to all theServing Cells in the set simultaneousU-TCI-UpdateList1, simultaneousU-TCI-UpdateList2, simultaneousU-TCI-UpdateList3 or simultaneousU-TCI-UpdateList4, respectively;

- DL BWP ID: This field indicates a DL BWP for which the MAC CE applies as the codepoint of the DCI bandwidth part indicator field as specified in TS 38.212 [9]. The length of the BWP ID field is 2 bits;

- UL BWP ID: This field indicates a UL BWP for which the MAC CE applies as the codepoint of the DCI bandwidth part indicator field as specified in TS 38.212 [9]. If value of unifiedTCI-StateType in the Serving Cell indicated by Serving Cell ID is joint, this field is

considered as the reserved bits. The length of the BWP ID field is 2 bits;

- Pi: This field indicates whether each TCI codepoint has multiple TCI states or single TCI state. If Pi field is set to 1, it indicates that ith TCI codepoint includes the DL TCI state and the UL TCI state. If Pi field is set to 0, it indicates that ith TCI codepoint includes only the DL/joint TCI state or the UL TCI state. The codepoint to which a TCI state is mapped is determined by its ordinal position among all the TCI state ID fields;

- D/U: This field indicate whether the TCI state ID in the same octet is for joint/downlink or uplink TCI state. If this field is set to 1, the TCI state ID in the same octet is for joint/downlink. If this field is set to 0, the TCI state ID in the same octet is for uplink;

- TCI state ID: This field indicates the TCI state identified by TCI-StateId as specified in TS 38.331 [5]. If D/U is set to 1, 7-bits length TCI state ID i.e. TCI-StateId as specified in TS 38.331 [5] is used. If D/U is set to 0, the most significant bit of TCI state ID is considered as the reserved bit and remainder 6 bits indicate the TCI-UL-State-Id as specified in TS 38.331 [5]. The maximum number of activated TCI states is 16;

- R: Reserved bit, set to 0.

| CORE SET Pool ID | Serving Cell ID | | | | | DL BWP ID | | Oct 1 |
|---|---|---|---|---|---|---|---|---|
| R | R | R | R | R | R | UL BWP ID | | Oct 2 |
| $P_1$ | $P_2$ | $P_3$ | $P_4$ | $P_5$ | $P_6$ | $P_7$ | $P_8$ | Oct 3 |
| D/U | TCI state ID 1 | | | | | | | Oct 4 |
| D/U | TCI state ID 2 | | | | | | | Oct 5 |

...

| D/U | TCI state ID N | | | | | | | Oct N+3 |

Figure 6.1.3.47-1: Unified TCI state activation/deactivation MAC CE

The unified TCI state activation/inactivation MAC CE may indicate a TCI state ID to be activated. The unified TCI state activation/inactivation MAC CE includes a serving cell ID, a DL BWP ID, and a UL BWP ID. A codepoint may be used to indicate a serving cell and a BWP to which the MAC CE may be applied. A Pi field may indicate whether each i-th codepoint includes a plurality of TCI states or a single TCI state. When Pi = 1, the i-th TCI codepoint includes a plurality of TCI states, and when Pi = 0, the i-th TCI codepoint may include only a DL/joint TCI state or a UL TCI state.

A D/U field may indicate whether a TCI state corresponding to a TCI state ID in the same octet is a DL/joint TCI state or a UL TCI state. Accordingly, in FIG. 11, the D/U field belonging to the same octet as a separate-type DL TCI state or a joint-type TCI state may be set to 1, and the D/U field belonging to the same octet as a separate-type UL TCI state may be set to 0.

24

An enhanced unified TCI state activation/inactivation MAC CE for joint TCI states may be defined as follows.

6.1.3.70 Enhanced Unified TCI States Activation/Deactivation MAC CE for Joint TCI States

The Enhanced Unified TCI States Activation/Deactivation MAC CE for Joint TCI States is identified by a MAC subheader with eLCID as specified in Table 6.2.1-1b. It has a variable size consisting of following fields:

-      Serving Cell ID: This field indicates the identity of the Serving Cell for which the MAC CE applies. The length of the field is 5 bits. If the indicated Serving Cell is configured as part of a simultaneousU-TCI-UpdateList1, simultaneousU-TCI-UpdateList2, simultaneousU-TCI-UpdateList3 or simultaneousU-TCI-UpdateList4 as specified in TS 38.331 [5], this MAC CE applies to all theServing Cells in the set simultaneousU-TCI-UpdateList1, simultaneousU-TCI-UpdateList2,      simultaneousU-TCI-UpdateList3      or      simultaneousU-TCI-UpdateList4, respectively;

-      DL BWP ID: This field indicates a DL BWP for which the MAC CE applies as the codepoint of the DCI bandwidth part indicator field as specified in TS 38.212 [9]. The length of the BWP ID field is 2 bits;

-      Fi,j: This field indicates for the TCI state ID fields associated with the codepoint i of the DCI Transmission Configuration Indication field whether the j-th joint TCI state is present or not, where j=1, 2. If Fi,j field is set to 1, it indicates the j-th joint TCI state for codepoint i is present. If Fi,j field is set to 0, it indicates the j-th joint TCI state for codepoint i is absent. The codepoint to which a TCI state is mapped is determined by its ordinal position among all the TCI state ID fields;

-      TCI state ID: This field indicates the 7-bits length TCI state ID identified by TCI-StateId as specified in TS 38.331 [5]. The maximum number of activated TCI states is 16;

-      R: Reserved bit, set to 0.

| R | Serving Cell ID | | | | | DL BWP ID | | Oct 1 |
|---|---|---|---|---|---|---|---|---|
| $F_{1,1}$ | $F_{1,2}$ | $F_{2,1}$ | $F_{2,2}$ | $F_{3,1}$ | $F_{3,2}$ | $F_{4,1}$ | $F_{4,2}$ | Oct 2 |
| $F_{5,1}$ | $F_{5,2}$ | $F_{6,1}$ | $F_{6,2}$ | $F_{7,1}$ | $F_{7,2}$ | $F_{8,1}$ | $F_{8,2}$ | Oct 3 |
| R | TCI state ID 1 | | | | | | | Oct 4 |
| R | TCI state ID 2 | | | | | | | Oct 5 |

...

| R | TCI state ID N | Oct N+3 |
|---|---|---|

Figure 6.1.3.70-1: Enhanced TCI state activation/deactivation MAC CE for Joint TCI States

Unlike the unified TCI state activation/inactivation MAC CE, the enhanced unified TCI state activation/inactivation MAC CE for joint TCI states may jointly manage TCI states of uplink and downlink, and thus the UL BWP ID may be omitted. An Fi,j field indicates whether the j-th joint TCI state exists in a TCI state ID field associated with codepoint i of the DCI Transmission Configuration Indication field. Here, j may be a value of 1 or 2. Accordingly, as shown in step #2 of FIG. 11, in the case of the joint type, up to two joint TCI states may correspond to each codepoint, and up to sixteen joint TCI states may be activated.

An enhanced unified TCI state activation/inactivation MAC CE for separate TCI states may be defined as follows.

6.1.3.71 Enhanced Unified TCI States Activation/Deactivation MAC CE for Separate TCI States

The Enhanced Unified TCI States Activation/Deactivation MAC CE CE for Separate TCI States is identified by a MAC subheader with eLCID as specified in Table 6.2.1-1b. It has a variable size consisting of following fields:

- Serving Cell ID: This field indicates the identity of the Serving Cell for which the MAC CE applies. The length of the field is 5 bits. If the indicated Serving Cell is configured as part of a simultaneousU-TCI-UpdateList1, simultaneousU-TCI-UpdateList2, simultaneousU-TCI-UpdateList3 or simultaneousU-TCI-UpdateList4 as specified in TS 38.331 [5], this MAC CE applies to all theServing Cells in the set simultaneousU-TCI-UpdateList1, simultaneousU-TCI-UpdateList2, simultaneousU-TCI-UpdateList3 or simultaneousU-TCI-UpdateList4,

respectively;

- DL BWP ID: This field indicates a DL BWP for which the MAC CE applies as the codepoint of the DCI bandwidth part indicator field as specified in TS 38.212 [9]. The length of the BWP ID field is 2 bits;

- UL BWP ID: This field indicates a UL BWP for which the MAC CE applies as the codepoint of the DCI bandwidth part indicator field as specified in TS 38.212 [9]. The length of the BWP ID field is 2 bits;

- $F_{i,j}$: This field indicates for the TCI state ID fields associated with the codepoint i of the DCI Transmission Configuration Indication field whether the j-th DL TCI state is present or not, where j=1, 2. If $F_{i,j}$ field is set to 1, it indicates the j-th DL TCI state for codepoint i is present. If $F_{i,j}$ field is set to 0, it indicates the j-th DL TCI state for codepoint i is absent;

- $S_{i,j}$: This field indicates for the TCI state ID fields associated with the codepoint i of the DCI Transmission Configuration Indication field whether the j-th UL TCI state is present or not, where j=1, 2. If $S_{i,j}$ field is set to 1, it indicates the j-th UL TCI state for codepoint i is present. If $S_{i,j}$ field is set to 0, it indicates the j-th UL TCI state for codepoint i is absent;

- TCI state ID: This field indicates the TCI state identified by TCI-StateId as specified in TS 38.331 [5]. If the indicated TCI state ID is DL TCI state, 7-bits length TCI state ID, i.e. TCI-StateId, as specified in TS 38.331 [5] is used. If the indicated TCI state ID is UL TCI state, the most significant bit of TCI state ID is considered as the reserved bit and remainder 6 bits indicate the TCI-UL-State-Id as specified in TS 38.331 [5]. TCI state IDs are in the order of indication of $F_{i,j}$ and $S_{i,j}$ fields. The maximum number of activated TCI states is 32;

- R: Reserved bit, set to 0.

| | | | | | | | | |
|---|---|---|---|---|---|---|---|---|
| R | Serving Cell ID | | | | | DL BWP ID | | Oct 1 |
| R | R | R | R | R | R | UL BWP ID | | Oct 2 |
| $F_{1,1}$ | $F_{1,2}$ | $S_{1,1}$ | $S_{1,2}$ | $F_{2,1}$ | $F_{2,2}$ | $S_{2,1}$ | $S_{2,2}$ | Oct 3 |
| $F_{3,1}$ | $F_{3,2}$ | $S_{3,1}$ | $S_{3,2}$ | $F_{4,1}$ | $F_{4,2}$ | $S_{4,1}$ | $S_{4,2}$ | Oct 4 |
| $F_{5,1}$ | $F_{5,2}$ | $S_{5,1}$ | $S_{5,2}$ | $F_{6,1}$ | $F_{6,2}$ | $S_{6,1}$ | $S_{6,2}$ | Oct 5 |
| $F_{7,1}$ | $F_{7,2}$ | $S_{7,1}$ | $S_{7,2}$ | $F_{8,1}$ | $F_{8,2}$ | $S_{8,1}$ | $S_{8,2}$ | Oct 6 |
| R | TCI state ID 1 | | | | | | | Oct 7 |
| R | TCI state ID 2 | | | | | | | Oct 8 |
| | ... | | | | | | | |
| R | TCI state ID N | | | | | | | Oct N+6 |

Figure 6.1.3.71-1: Enhanced TCI state activation/deactivation MAC CE for Separate TCI States

Unlike the unified TCI state activation/inactivation MAC CE, the enhanced unified TCI state activation/inactivation MAC CE for separate TCI states may include the Fi,j field and the Si,j field. The Fi,j field indicates whether the j-th DL TCI state exists in a TCI state ID field associated with codepoint i of the DCI Transmission Configuration Indication field. The Si,j field indicates whether the j-th UL TCI state exists in a TCI state ID field associated with codepoint i of the DCI Transmission Configuration Indication field. Accordingly, in the case of the separate type in step #2 of FIG. 11, up to two DL TCI states and up to two UL TCI states may correspond to each codepoint, so up to thirty-two TCI states may be activated.

A bast station may deliver DCI to a terminal through a PDCCH. The DCI may include the transmission configuration indication field, and decoding may be performed using a TCI state corresponding to codepoint i of the transmission configuration indication field included in the DCI. As described above, the correspondence between codepoint i and the TCI state may be indicated by a TCI state activation command.

The terminal may use a TCI state using the received DCI as follows.

For a CORESET other than a CORESET with index 0, if a UE is provided a single TCI state for a CORESET, or if the UE receives a MAC CE activation command for one or two of the provided TCI states for a CORESET, the UE assumes that the DM-RS antenna port associated

with PDCCH receptions in the CORESET is quasi co-located with the one or more DL RS configured by the TCI states. For a CORESET with index 0, the UE expects that a CSI-RS configured with qcl-Type set to 'typeD' in a TCI state indicated by a MAC CE activation command for the CORESET is provided by a SS/PBCH block

- if the UE receives a MAC CE activation command for one of the TCI states, the UE applies the activation command in the first slot that is after slot $k + 3N_{\text{slot}}^{\text{subframe},\mu} + 2^{\mu} \cdot k_{\text{mac}}$ where k is the slot where the UE would transmit a PUCCH with HARQ-ACK information for the PDSCH providing the activation command, $\mu$ is the SCS configuration for the PUCCH in the slot when the activation command is applied, and $k_{mac}$ is a number of slots for SCS configuration $\mu = 0$ provided by kmac or $k_{mac} = 0$ if kmac is not provided.

If a UE is provided TCI-State in dl-OrJointTCI-StateList, a DM-RS antenna port for PDCCH receptions in a CORESET, other than a CORESET with index 0, associated only with USS sets and/or Type3-PDCCH CSS sets, and a DM-RS antenna port for PDSCH receptions scheduled by DCI formats provided by PDCCH receptions in the CORESET are quasi co-located with reference signals provided by the indicated TCI-State [6, TS 38.214].

If a UE is provided followUnifiedTCI-State for a CORESET, other than a CORESET with index 0, associated at least with CSS sets other than Type3-PDCCH CSS sets, a DM-RS antenna port for PDCCH receptions in the CORESET and a DM-RS antenna port for PDSCH receptions scheduled by DCI formats provided by PDCCH receptions in the CORESET are quasi co-located with reference signals provided by the indicated TCI-State.

If a UE is provided dl-OrJointTCI-StateList and is indicated a first TCI-State and a second TCI-State, and is provided apply-IndicatedTCIState for a CORESET, other than a CORESET with index 0,

- if the CORESET is associated only with USS sets and/or Type3-PDCCH CSS sets

- if apply-IndicatedTCIState = 'first', the UE assumes that a DM-RS antenna port for PDCCH receptions in the CORESET is quasi co-located with the reference signals provided by the first TCI-State

- if apply-IndicatedTCIState = 'second', the UE assumes that a DM-RS antenna port for PDCCH receptions in the CORESET is quasi co-located with the reference signals provided by the second TCI-State

- if apply-IndicatedTCIState = 'both', the UE assumes that a DM-RS antenna port for PDCCH receptions in the CORESET is quasi co-located with the reference signals provided by the first TCI-State and the second TCI-State

- if the CORESET is associated at least with CSS sets other than Type3-PDCCH CSS

sets,

- if apply-IndicatedTCIState = 'first', the UE assumes that a DM-RS antenna port for PDCCH receptions in the CORESET is quasi co-located with the reference signals provided by the first TCI-State

- if apply-IndicatedTCIState = 'second', the UE assumes that a DM-RS antenna port for PDCCH receptions in the CORESET is quasi co-located with the reference signals provided by the second TCI-State

- if apply-IndicatedTCIState = 'both', the UE assumes that a DM-RS antenna port for PDCCH receptions in the CORESET is quasi co-located with the reference signals provided by the first TCI-State and the second TCI-State

- if apply-IndicatedTCIState = 'none', the UE assumes that a DM-RS antenna port for PDCCH receptions in the CORESET is quasi co-located with the one or more DL RS configured by a TCI state indicated by a MAC CE activation command for the CORESET If the UE is provided dl-OrJointTCI-StateList and

- is not provided coresetPoolIndex or is provided coresetPoolIndex with a value of 0 for first CORESETs on an active DL BWP of a serving cell,

- is provided coresetPoolIndex with a value of 1 for second CORESETs on the active DL BWP of the serving cells, and

- is provided followUnifiedTCI-State for the first and second CORESETs, that do not include a CORESET with index 0 and are associated only with USS sets and/or Type3-PDCCH CSS sets, or with CSS sets other than Type3-PDCCH CSS sets, the UE

- assumes that DM-RS antenna ports for PDCCH receptions in the first and second CORESETs, and DM-RS antenna ports for PDSCH receptions scheduled by DCI formats provided by PDCCH receptions in the first and second CORESETs, are quasi co-located with the reference signals provided by indicated TCI-State specific to the first and second CORESETs, respectively

- transmits PUSCH scheduled by DCI formats provided by PDCCH receptions in the first and second CORESETs using a spatial domain filter corresponding to TCI-State or TCI-UL-State specific to the first and second CORESETs, respectively.

If a UE is provided two coresetPoolIndex values 0 and 1 for first and second CORESETs, or is not provided coresetPoolIndex value for first CORESETs and is provided coresetPoolIndex value of 1 for second CORESETs, respectively, a MAC CE command activating TCI states for the first or second CORESETs [11, TS 38.321] can include coresetPoolIndex value 0 or 1

- if the UE is provided SSB_MTC_AdditionalPCI, the activated TCI states for the first and/or the second CORESETs are for physCellId from ServingCellConfigCommon and the activated TCI states for either the first or the second CORESETs can be for physCellId from additionalPCI.

If a UE is provided by simultaneousTCI-UpdateList1 or simultaneousTCI-UpdateList2 up to two lists of cells for simultaneous TCI state activation, the UE applies the antenna port quasi colocation provided by one or two TCI-State each with same activated tci-StateID value, to CORESETs with a same index in all configured DL BWPs of all configured cells in a list determined from a serving cell index, where one or two tci-StateID, the CORESET index, and the serving cell index are provided by a MAC CE command.

That is, when the UE receives a single TCI state for a CORESET, or when a MAC CE activation command is received for one or two of the TCI states provided for the CORESET, the terminal may assume that the DM-RS antenna ports associated with PDCCH receptions within the CORESET are in a QCL relationship with one or more DL RSs configured by the TCI states.

A TCI state may be indicated by being divided into two states. As an example, when a terminal is provided with dl-OrJointTCI-StateList, TCI states may be indicated through a combination of two TCI states (a first TCI state, a second TCI state, the first TCI state and the second TCI state, and none). As an example, when the terminal indicates the first TCI state through apply-IndicatedTCISate, the terminal may assume that a reference signal provided by the first TCI state is in the QCL relationship with a DM-RS antenna port for PDCCH reception.

When a UE is provided with dl-OrJointTCI-StateList and is not provided with coresetPoolIndex or is provided coresetPoolIndex with a value of 0 for a first CORESET in an activated DL BWP of a serving cell, the UE may assume that the DM-RS antenna ports for PDCCH reception in the first and second CORESETs and the DM-RS antenna ports for PDSCH reception scheduled by the DCI format provided by PDCCH receptions in the first and second CORESETs are respectively in a QCL relationship with a reference signal provided by a TCI state specific to each of the first and second CORESETs. Additionally, the UE may transmit PUSCH scheduled by the DCI format provided by PDCCH receptions in the first and second CORESETs using the spatial domain filter corresponding to the TCI state specific to each of the first and second CORESETs.

The TCI state may be used to transmit an uplink signal. A terminal may use the following procedure for uplink power control.

---

7 Uplink Power control

Uplink power control determines a power for PUSCH, PUCCH, SRS, and PRACH transmissions.

A UE does not expect to simultaneously maintain more than four pathloss estimates per serving cell for all PUSCH/PUCCH/SRS transmissions as described in clauses 7.1.1, 7.2.1, and 7.3.1, except for SRS transmissions configured by SRS-PosResourceSet as described in clause 7.3.1. If the UE is provided a number of RS resources for pathloss estimation for PUSCH/PUCCH/SRS transmissions that is larger than 4, the UE maintains for pathloss estimation RS resources corresponding to RS resource indexes $q_d$ as described in clauses 7.1.1, 7.2.1, and 7.3.1. If an RS resource updated by MAC CE, as described in clauses 7.1.1, 7.2.1 and 7.3.1, is one from the RS resources the UE maintains for pathloss estimation for PUSCH/PUCCH/SRS transmissions, the UE applies the pathloss estimation based on the RS resources starting from the first slot that is after slot

$$k + 3 \cdot N_{\text{slot}}^{\text{subframe},\mu} + 2^\mu \cdot k_{\text{mac}}$$ where $k$ is the slot where the UE would transmit a PUCCH or PUSCH with HARQ-ACK information for the PDSCH providing the MAC CE, $\mu$ is the SCS configuration for the PUCCH or PUSCH, respectively, that is determined in the slot when the MAC CE command is applied and $k_{mac}$ is a number of slots for SCS configuration $\mu = 0$ provided by kmac or $k_{mac} = 0$ if kmac is not provided.

A PUSCH/PUCCH/SRS/PRACH transmission occasion i is defined by a slot index $n_{s,f}^{\mu}$ within a frame with system frame number *SFN,* a first symbol S within the slot, and a number of consecutive symbols *L*. For a PUSCH transmission with repetition Type B, a PUSCH transmission occasion is a nominal repetition [6, TS 38.214].

In the remaining of this clause, if a UE is provided TCI-State in dl-OrJointTCI-StateList or TCI-UL-State, and for each indicated one or two TCI-State or TCI-UL-State of a PUSCH, PUCCH, or SRS transmission occasion as described in [6, TS 38.214]

- in clauses 7.1.1, 7.2.1, and 7.3.1, the RS index $q_d$ for obtaining the downlink pathloss estimate for PUSCH, PUCCH, and SRS transmission is provided by pathlossReferenceRS-Id-r17 associated with or included in the indicated TCI-State or TCI-UL-State except for SRS transmission that is not provided followUnifiedTCI-StateSRS

- in clause 7.1.1, if p0AlphaSetforPUSCH is provided, the values of $P_{\text{O\_UE\_PUSCH},b,f,c}(j)$, $\alpha_{b,f,c}(j)$ , and the PUSCH power control adjustment state *l* are provided by p0AlphaSetforPUSCH associated with the indicated TCI-State or TCI-UL-State

- in clause 7.2.1, if p0AlphaSetforPUCCH is provided, the values of $P_{\text{O\_UE\_PUCCH}}(q_u)$ and the PUCCH power control adjustment state *l* are provided by p0AlphaSetforPUCCH associated with the indicated TCI-State or TCI-UL-State

- in clause 7.3.1, if p0AlphaSetforSRS is provided,

- if followUnifiedTCI-StateSRS is provided for a SRS resource set, the values of $P_{\text{O\_UE\_SRS},b,f,c}(q_s)$, $\alpha_{\text{SRS},b,f,c}(q_s)$, and SRS power control adjustment state *l* are provided by p0AlphaSetforSRS associated with the indicated TCI-State or TCI-UL-State

---

(continued)

- else, if followUnifiedTCI-StateSRS is not provided for a SRS resource set and for a SRS resource from the SRS resource set, the values of $P_{O\_UE\_SRS,b,f,c}(q_s)$, $\alpha_{SRS,b,f,c}(q_s)$, and SRS power control adjustment state $l$ are provided by p0AlphaSetforSRS associated with TCI-State or TCI-UL-State of an SRS resource with lowest SRS-ResourceId in the SRS resource set and a RS index $q_d$ for obtaining a pathloss estimate for the SRS transmission is provided by pathlossReferenceRS-Id-r17 associated with or included in the TCI-State or TCI-UL-State of an SRS resource with lowest SRS-ResourceId in the SRS resource set $P_{O\_SRS,b,f,c}(q_s)$ is the sum of the component $P_{O\_UE\_SRS,b,f,c}(q_s)$ and a component p0 provided by SRS-ResourceSet corresponding to the SRS resource set.

In the remaining of this clause, if a PDCCH reception by a UE includes two PDCCH candidates from corresponding search space sets, as described in clause 10.1

- a PDCCH monitoring occasion is the union of the PDCCH monitoring occasions for the two PDCCH candidates
- the end of the PDCCH reception is the end of the PDCCH candidate that ends later The PDCCH reception includes the two PDCCH candidates also when the UE is not required to monitor one of the two PDCCH candidates as described in clauses 10 (except clause 10.4), 11.1, 11.1.1 and 17.2.

The uplink power control may be used to determine power for PUSCH, PUCCH, SRS, or PRACH transmission. The UE may be configured not to simultaneously maintain four or more pathloss estimations for PUSCH/PUCCH/SRS transmissions per serving cell.

For PUSCH, PUCCH, SRS, or PRACH transmission, a transmission occasion may be defined by a slot index within a frame, a first symbol within a slot, and the number of consecutive symbols. When a terminal receives TCI states from dl-OrJointTCI-StateList, an RS index for downlink path loss estimation for PUSCH, PUCCH, or SRS transmission may be provided for each of the one or two TCI states associated with the PUSCH, PUCCH, or SRS transmission occasion.

Power control values may be set explicitly or implicitly. As an example, when followUnifiedTCI-StateSRS is set, power control values are provided from p0AlphaSetforSRS associated with a TCI state. When followUnifiedTCI-StateSRS is not set, power control values and a RS index for path loss estimation may be provided from a TCI state associated with a SRS resource with the lowest SRS-ResourceId. Here, a total SRS power value may be determined based on the sum of an individual SRS power control value and an additional component according to an SRS resource set.

Hereinafter, an initial access procedure between a terminal and a base station will be described. When an initial access procedure with the base station is performed due to reasons such as the terminal's power on/off operation or coverage loss, an identification procedure between the base station and the terminal may be required. First, the terminal may perform an initial cell search operation with the base station. The terminal may perform monitoring to receive a synchronization signal. The synchronization signal may be at least one of a primary synchronization signal (PSS) and a secondary synchronization signal (SSS). The terminal may receive a physical broadcast channel (PBCH) signal from the base station to obtain broadcast information within a cell. The terminal may obtain information on the cell using at least one of an MIB or an SIB based on a physical broadcast channel. A block containing a PSS, an SSS, and a PBCH may be referred to as a synchronization signal block (SSB).

The terminal may perform a random access procedure. The terminal may transmit a preamble to the base station and receive a random access response (RAR) from the base station. A RAR message may contain a temporary identifier. The terminal may transmit MSG3 (or an RRC connection request message) using the scheduling information in the RAR, and the base station may perform a contention resolution procedure by transmitting MSG4 (or a contention resolution message) to the terminal in response to MSG3

The base station may perform beam management based on a RACH occasion that is used to transmit the preamble used in the random access procedure. As an example, the base station may determine a beam over which the terminal receives the synchronization signal based on the RACH occasion in which the preamble is transmitted. As described above, a synchronization signal may also be included as a reference signal for indicating a QCL relationship, and the QCL relationship may be configured based on the SSB received through the initial access procedure.

In addition, a channel measurement procedure may be performed for beam management. The terminal may receive a reference signal from the base station. The terminal may report channel state information (CSI) to the base station based on the reference signal. The CSI may include at least one of reference signal received power (RSRP), reference signal received quality (RSRQ), and a signal-to-noise ratio (SNR). The base station may use the received CSI to adjust beamforming for the terminal or optimize radio resource allocation. For channel measurement, the base station may transmit configuration information for channel measurement to the terminal. The configuration information for channel measurement may include information associated with a measurement target and information on a measurement interval.

Configurations of beams of the base station and the terminal may be managed through an artificial intelligence (AI). For convenience of description, a beam set A is a beam set for which measurement is performed using an input of an AI/ML model, and a beam set A refers to a beam set that is determined based on inference of the AI/ML model. The beam set A and the beam set B may be beam information regarding the same frequency range.

The AI may be used to infer a spatial domain DL beam for the beam set A based on the measurement of the beam set B. As another example, the AI may be used to infer a temporal DL beam for the beam set A based on past measurement results of the beam set B. Here, the beam set A and the beam set B may be different sets, or the beam set B may be a subset of the beam set A.

In addition, inputs of the AI model may be formed as various combinations. As an example, the input for the AI may include at least one of L1-RSRP measurements based on the beam set B, other auxiliary information, a channel impulse response (CIR) based on the beam set B, or a downlink Tx/Rx beam ID associated with L1-RSRP measurement for the beam set B.

The above-described AI model may be designed to infer a beam including at least one of a DL Rx beam and a DL Tx beam. In addition, the output of the AI model may include at least one of a Tx beam, a Rx beam, a L1-RSRP of the Tx beam, a L1-RSRP of the Rx beam, an angle of the Tx beam, an angle of the Rx beam, and other information.

A beam management method using an AI model is not limited to the above-described method. The AI model may be configured in various manners by configuring an input and an output from various combinations including configurations of the beam set A and the beam set B, performance monitoring, data collection, and auxiliary information.

In addition, learning and inference methods may also be implemented in various manners. As an example, an AI may be learned or trained using an AI/ML model. Learning and training may be performed by a network or a UE. In addition, learning and inference may be performed in different devices. As an example, learning may be performed in a network, and inference may be performed in a terminal. A portion of learning may be performed in a first device, and another portion of the learning may be performed in a second device, enabling split or distributed learning. Similar to learning, split inference may be performed using a plurality of devices. Input data for inference may also be generated in various manners. As an example, input data may be generated in a UE, and inference may be performed in a network using the input data. In addition, input data generated in a UE may be used for inference performed within the UE.

In 3GPP NR, for a process of transmitting uplink data and/or signals using a single uplink DCI-based single TRP scheme or a single downlink DCI-based multi-TRP scheme, no operational method for switching between the single TRP scheme and the multi-TRP scheme has been developed, and there is no clear definition or standardized procedure established for such an operation. In particular, the operations for switching the transmission scheme for an uplink physical channel from multiple TRPs to a single TRP and from the single TRP to the multiple TRPs may be different from each other, depending on a single-TRP scheme applied to the uplink physical channel.

Here, the single-TRP scheme may refer to a signal transmission scheme for transmitting and receiving control and/or data information between one UE and one TRP. On the other hand, a multi-TRP scheme may refer to a signal transmission scheme for transmitting and receiving control and/or data information between one UE and a plurality of TRPs. Accordingly, a single DCI-based single-TRP scheme refers to a scheme for transmitting and/or receiving control information or data in the single-TRP scheme based on one piece of DCI and control information. On the other hand, a single DCI-based multi-TRP scheme refers to a scheme for transmitting and/or receiving control information or data in the multi-TRP scheme based on one piece of DCI and control information.

According to the present disclosure, during an uplink signal transmission process, an operation of switching between the single DCI-based single-TRP scheme and the single DCI-based multi-TRP scheme may be performed as follows.

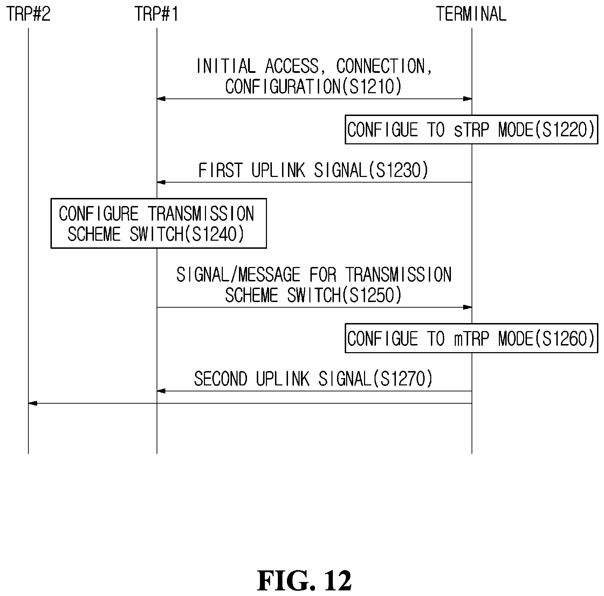

FIG. 12 illustrates an example of a procedure of transmitting an uplink signal according to an embodiment of the present disclosure. FIG. 12 exemplifies a method that is performed by a UE.

In step S1210, the UE may perform an initial access, connection establishment, and configuration procedure with a first TRP.

In step S1220, the UE may configure a transmission scheme of a first uplink signal to a single-TRP scheme.

In step S1230, the UE may transmit the first uplink signal to the first TRP using the single-TRP scheme. Here, the UE may transmit an uplink signal including a PUSCH and/or a PUCCH to the first TRP.

In step S1240, the first TRP may decide to switch the transmission scheme of the uplink signal. For example, the first TRP may decide to switch the transmission scheme of the UE's uplink signal based on information regarding a communication status with the UE.

In step S1250, the UE may receive a signal and/or message for switching the uplink signal transmission scheme from the first TRP. Here, the signal and/or message for switching the uplink signal transmission scheme may be delivered in the form of MAC-CE, RRC, and DCI.

In step S1260, the UE may configure a transmission scheme of a second uplink signal to a multi-TRP scheme.

In step S1270, the UE may transmit the second uplink signal to the first TRP and/or the second TRP using the multi-TRP scheme. Here, the UE may transmit an uplink signal including a PUSCH and/or a PUCCH to the first TRP and/or the second TRP.

According to an embodiment of the present disclosure, an operation of switching between the single-TRP scheme and the multi-TRP scheme may be independently applied to two physical channels. That is, the single-TRP scheme or the multi-TRP scheme may be applied to the PUCCH, and the single-TRP scheme or the multi-TRP scheme may be applied to the PUSCH.

According to another embodiment of the present disclosure, an operation of switching between the single-TRP scheme and the multi-TRP scheme may be commonly applied to two physical channels. That is, the single-TRP scheme or the multi-TRP scheme may be commonly applied to the PUCCH and the PUSCH. Herein, the PUCCH and the PUSCH that are transmitted using the single-TRP scheme may be transmitted at least one identical TRP. Alternatively, the PUCCH and the PUSCH that are transmitted using the single-TRP scheme may each be transmitted at least one different TRP.

According to another embodiment of the present disclosure, an operation of switching between the single-TRP scheme and the multi-TRP scheme may be commonly applied to two physical channels. That is, the single-TRP scheme or the multi-TRP scheme may be commonly applied to the PUCCH and the PUSCH. Herein, the PUCCH and the PUSCH that are transmitted using the single-TRP scheme may be transmitted only to at least one identical TRP.

In the present disclosure, for convenience of description, two TRPs may receive a signal using the multi-TRP scheme. However, the methods proposed in the present invention are applicable to the operation of a communication system including two or more TRPs in a simple, extended, modified, or combined form.

A method of setting a single DCI-based PUSCH transmission scheme to the single-TRP scheme or the multi-TRP scheme may be described as follows.

During the process of setting the transmission scheme of PUSCH, two joint/uplink TCI states may be indicated via MAC-CE and/or downlink DCI. In addition, DCI that schedules the PUSCH may include an SRS resource set indicator. The SRS resource set indicator may indicate a TCI state that is used to transmit the PUSCH. For example, the SRS resource set indicator may indicate the application of either a first TCI state, a second TCI state, or both TCI states. In addition, based on a TCI state indicated by the SRS resource set indicator in the DCI that schedules the PUSCH, the transmission scheme of the PUSCH may be set to the single-TRP scheme or the multi-TRP scheme.

Herein, the DCI that indicates two joint/uplink TCI states may be downlink DCI including a TCI state filed, that is, DCI 1_1 or DCI 1_2. In addition, uplink DCI that schedules the PUSCH may be DCI 0_1 or 0_2 including scheduling information of the PUSCH. That is, the two joint/uplink TCI states may be indicated by DCI 1_1 or DCI 1_2, which are received prior to DCI 0_1 or DCI 0_2.

Based on the foregoing description, the present disclosure proposes the following embodiments for switching the signal transmission scheme of uplink channels between the single-TRP scheme and the multi-TRP scheme.

According to an embodiment of the present invention, an operation of switching between the single-TRP scheme and the multi-TRP scheme may be independently applied to two physical channels, that is, PUCCH and PUSCH. That is, the single-TRP scheme or the multi-TRP scheme may be applied to the PUCCH, and the single-TRP scheme or the multi-TRP scheme may also be applied to the PUSCH.

In this case, the single-TRP scheme and the multi-TRP scheme may be independently applied to each of the PUCCH and the PUSCH. For example, a UE may transmit the PUCCH using the multi-TRP scheme and transmit the PUSCH using the single-TRP scheme. Alternatively, the UE may transmit the PUCCH using the singe-TRP scheme and transmit the PUSCH using the multi-TRP scheme.

According to an embodiment, when both the PUCCH and the PUSCH are transmitted using the single-TRP scheme, the PUCCH and the PUSCH may be transmitted to the same TRP. On the other hand, according to another embodiment, when both the PUCCH and the PUSCH are transmitted using the single-TRP scheme, the PUCCH and the PUSCH may be transmitted to different TRPs.

According to an embodiment, when both the PUCCH and the PUSCH are transmitted using the multi-TRP scheme, the PUCCH and the PUSCH may be transmitted to two TRPs that are identical to each other. According to another embodiment, when both the PUCCH and the PUSCH are transmitted using the multi-TRP scheme, the PUCCH and the PUSCH may be transmitted to two TRPs that are different from each other. According to still another embodiment, when both the PUCCH and the PUSCH are transmitted using the multi-TRP scheme, at least one TRP that receives the PUCCH and the PUSCH may be identical, while the remaining TRPs that receive the PUCCH and the PUSCH may be different from each other.

Here, when the PUCCH and the PUSCH are transmitted to the same TRP, the same TCI state may be applied to the transmission of the PUCCH and the PUSCH. On the other hand, when the PUCCH and the PUSCH are transmitted to different TRPs, different TCI states may be applied to the transmission of the PUCCH and the PUSCH.

During the process of switching the transmission scheme of PUSCH between the single-TRP scheme and the multi-TRP scheme, an MAC-CE and/or downlink DCI may indicate two joint/uplink TCI states. Moreover, uplink DCI that schedules the PUSCH may include an SRS resource indicator specifying a TCI state that is to be used for PUSCH transmission and is selected from the two joint/uplink TCI states indicated by the MAC-CE and/or the downlink DCI. When the SRS resource indicator set of the uplink DCI is '00', a first TCI state may be used. When the SRS resource indicator set of the uplink DCI is '10', a second TCI state may be used. When the SRS resource indicator set of the uplink DCI is '10' or '11', the two TCI states may be used.

In addition, a method of switching between the single-TRP scheme and the multi-TRP scheme for a PUCCH may be described as follows.

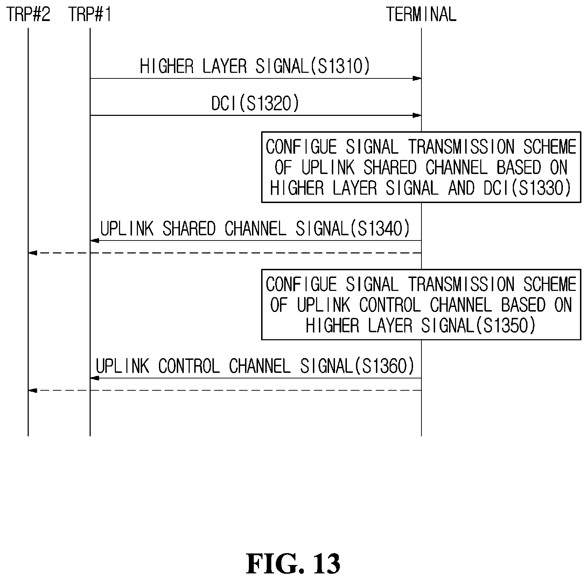

FIG. 13 illustrates an example of a procedure of configuring a signal transmission scheme for an uplink shared channel signal and an uplink control channel signal and transmitting the signals according to an embodiment of the present disclosure. FIG. 13 exemplifies a method that is performed by a UE.

In step S1310, the UE may receive a higher layer signal from a first TRP. Here, the higher layer signal may be a message and/or a signal including information such as an MAC-CE and a RRC parameter.

In step S1320, the UE may receive DCI from the first TRP. Here, the DCI may be uplink DCI and/or downlink DCI.

In step S1330, the UE may configure a signal transmission scheme of an uplink shared channel based on the higher layer signal and the DCI. The UE may set the signal transmission scheme of the uplink shared channel as the single-TRP scheme or the multi-TRP scheme based on the higher layer signal and the DCI. For example, the signal transmission scheme of the uplink shared channel may be set based on a TCI state that is indicated by the higher layer signal and the DCI.

In step S1340, the UE may transmit an uplink shared channel signal to at least one TRP. When the signal transmission scheme of the uplink shared channel signal is the single-TRP scheme, the UE may transmit the uplink shared channel signal to a first TRP or a second TRP. On the other hand, when the signal transmission scheme of the uplink shared channel signal is the multi-TRP scheme, the UE may transmit the uplink shared channel signal to the first TRP and/or the second TRP.

In step S1350, the UE may configure the signal transmission scheme of an uplink control channel based on the higher layer signal and the DCI. The UE may set the signal transmission scheme of the uplink control channel as the single-TRP scheme or the multi-TRP scheme based on the higher layer signal and the DCI. For example, the signal transmission scheme of the uplink control channel may be set based on a TCI state that is indicated by the higher layer signal and the DCI.

In step S1360, the UE may transmit an uplink control channel signal to at least one TRP. When the signal transmission scheme of the uplink control channel signal is the single-TRP scheme, the UE may transmit the uplink control channel signal to the first TRP or the second TRP. On the other hand, when the signal transmission scheme of the uplink control channel signal is the multi-TRP scheme, the UE may transmit the uplink control channel signal to the first TRP and/or the second TRP.

According to an embodiment of the present invention, a PUCCH may be transmitted by a RRC and/or an MAC-CE using a TCI state that is set for a PUCCH resource and/or each group.

When the RRC or the MAC-CE indicates one TCI state, the UE may transmit the PUCCH to one TRP. Here, one TCI state may be set by one PUCCH resource and/or a group.

When the RRC or the MAC-CE indicates two TCI states, the UE may transmit the PUCCH to each TRP by different TCI states. Two PUCCHs may be transmitted using an SDM technique, a TDM technique, an FDM technique, or an SFN technique. Here, two joint/uplink TCI states may be set and managed by one PUCCH resource and/or a group. Alternatively, one joint/uplink TCI state may be set and managed by different PUCCH resources and/or groups. That is, two TCI states indicated by the RRC or the MAC-CE may be configuration information for one PUCCH resource and/or a group. Alternatively, two TCI states indicated by the RRC or the MAC-CE may be configuration information for each of two different PUCCH resources and/or groups.

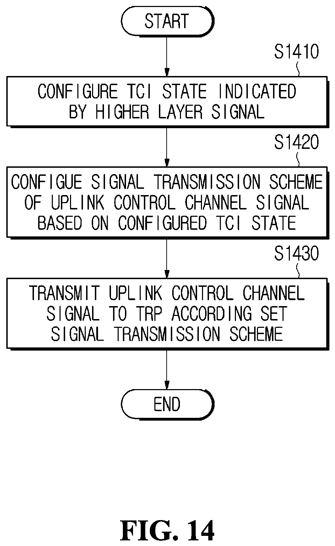

FIG. 14 illustrates an example of a procedure of configuring a signal transmission scheme of an uplink control channel based on a TCI state that is indicated by a higher layer signal according to an embodiment of the present disclosure. FIG. 14 exemplifies a method that is performed by a UE.

In step S1410, the UE may configure a TCI state indicated by a higher layer signal. TCI state may be configured by the higher layer signal according to each uplink control channel and/or each group. Here, the higher layer signal may be a signal such as an MAC-CE and a RRC. The higher layer signal may indicate one or two TCI states.

In step S1420, the UE may configure the signal transmission scheme of an uplink control channel signal based on the configured TCI state. When the higher layer signal indicates one TCI state, the UE may set the signal transmission scheme of the uplink control channel signal as the single-TRP scheme. On the other hand, when the higher layer signal indicates two TCI states, the UE may set the signal transmission scheme of the uplink control channel signal as the multi-TRP scheme.

In step S1430, the UE may transmit an uplink control channel signal to a TRP according to the set signal transmission scheme. When the signal transmission scheme of the uplink control channel is the single-TRP scheme, the UE may transmit the uplink control channel signal to the first TRP or the second TRP. On the other hand, when the signal transmission scheme of the uplink control channel is the multi-TRP scheme, the UE may transmit the uplink control channel signal to the first TRP and/or the second TRP. That is, the UE may transmit the uplink control channel signal based on a TCI state indicated by the higher layer signal.

According to another embodiment of the present invention, when a communication system operates a TCI state for UL and DL according to a unified TCI state scheme, a TCI state applied to a PUCCH may be configured by a RRC. Here, an MAC-CE and/or downlink DCI may indicate and/or activate two joint/uplink TCI states, and the RRC may indicate at least one TCI state of the two joint/uplink TCI states. That is, the RRC may indicate whether, of the two joint/uplink TCI states, a first TCI state or a second TCI state is applied for the transmission of the PUCCH, whether both the first TCI state and the second TCI state are applied, and whether neither the first TCI state nor the second TCI state is applied. In addition, the UE may configure a TCI state that is applied for the transmission of the PUCCH through the RRC.

When the RRC indicates the use of either the first TCI state or the second TCI state, the UE may transmit the PUCCH to one TRP according to the single-TRP scheme. In this case, the TCI state indicated by the RRC may be configured to include mapping information with a specific one PUCCH resource and/or a group.

When a RRC signal and/or a parameter indicates the use of two TCI states, the UE may transmit PUCCHs to two different TRPs respectively. In this case, the two PUCCHs may be transmitted using an SDM technique, a TDM technique, an FDM technique, or an SFN technique. On the other hand, when the RRC signal and/or the parameter indicates that neither of the two TCI states is used, the UE may expect reception of TCI state indication information through the RRC and/or the MAC-CE. Alternatively, the UE may transmit the PUCCH by applying a TCI state (or TCI states) indicated by a RRC or an MAC-CE that is received most recently. Alternatively, the UE may transmit the PUCCH by applying a TCI state (or TCI states) that is used for the most recent PUCCH transmission. Alternatively, the UE may transmit the PUCCH by combining the above-described methods. That is, information indicating the transmission scheme of an uplink signal is not obtained through a RRC or an MAC-CE, the UE may transmit a PUCCH by applying a TCI state (or TCI states) that is indicated through a RRC or an MAC-CE that is received most recently or by applying a TCI state (or TCI states) that is used to transmit a most recent PUCCH.

Here, two joint/uplink TCI states indicated by an MAC-CE/downlink DCI may be set for each PUCCH resource and/or each group. Alternatively, two joint/uplink TCI states indicated by an MAC-CE/downlink DCI may be set equally for all PUCCH resources and/or groups. Here, the PUCCH and the PUSCH that are transmitted according to the multi-TRP scheme may be transmitted using an SDM technique, a TDM technique, an FDM technique, or an SFN technique.

When a PUCCH is transmitted using the SDM, SFN, and FDM techniques based on the multi-TRP scheme, the UE may always map two indicated joint/uplink TCI states to one PUCCH resource and/or group and thus transmit PUCCHs simultaneously.

The above-described embodiment may be an embodiment in which a PUCCH and a PUSCH are transmitted based on two joint/uplink TCI states that are indicated by downlink DCI including a TCI state field. However, when the TCI state field is defined by uplink DCI or the two joint/uplink TCI states are indicated at least by the uplink DCI, the downlink DCI of the above-described embodiment may be replaced by the uplink DCI. In another embodiment of the present disclosure, a modified and expanded form may be applied as shown in the above-described method.

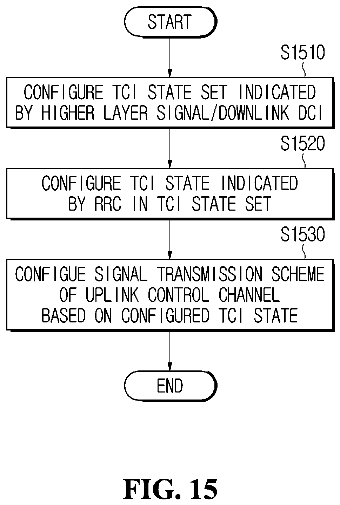

FIG. 15 illustrates an example of a procedure of configuring a signal transmission scheme of an uplink control channel based on a TCI state that is set by RRC according to an embodiment of the present disclosure. FIG. 15 exemplifies a method that is performed by a UE.

In step S1510, the UE may configure a TCI state set indicated by a higher layer signal and/or downlink DCI. The higher layer signal and/or the downlink DCI may indicate a TCI set that includes one or more TCI states. Here, the higher layer signal may be a signal such as an MAC-CE.

In step S1520, the UE may configure a TCI state indicated by a RRC in the TCI state set indicated by the higher layer signal and/or the downlink DCI.

In step S1530, the UE may configure the signal transmission scheme of an uplink control channel signal based on the configured TCI state. When a RRC indicates one TCI state in the TCI state set, the UE may transmit an uplink control channel signal to a TRP according to the single-TRP scheme. On the other hand, when the RRC indicates a plurality of TCI states in the TCI state set, the UE may transmit the uplink control channel signal to at least one or more TRPs according to the multi-TRP scheme.

According to another embodiment of the present invention, an operation of switching between the single-TRP scheme and the multi-TRP scheme may be applied to two physical channels, that is, PUCCH and PUSCH. That is, both the PUCCH and the PUSCH may be transmitted according to the single-TRP scheme or may be transmitted according to the multi-TRP scheme. In this case, when the PUCCH and the PUSCH are transmitted according to the single-TRP scheme, the UE may transmit each of the PUCCH and the PUSCH to one distinct TRP. Alternatively, when the PUCCH and the PUSCH are transmitted according to the single-TRP scheme, the UE may transmit the PUCCH and the PUSCH to one identical TRP.

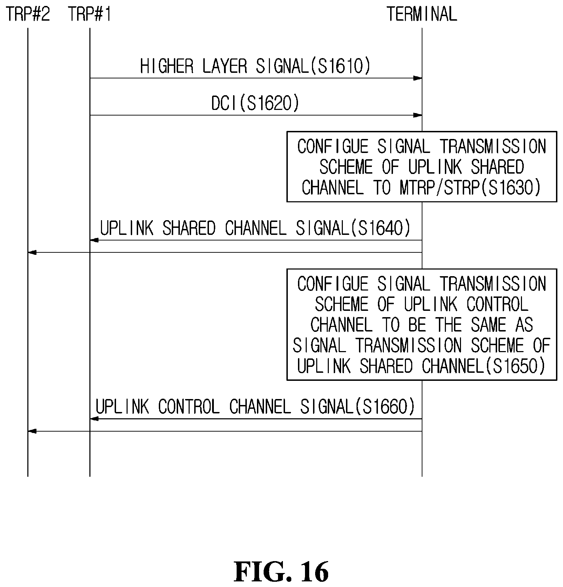

FIG. 16 illustrates an example of a procedure of configuring the same signal transmission scheme both for an uplink shared channel signal and an uplink control channel signal and transmitting the signals according to an embodiment of the present disclosure. FIG. 16 exemplifies a method that is performed by a UE.

In step S1610, the UE may receive a higher layer signal from a first TRP. Here, the higher layer signal may be a message and/or a signal including information such as an MAC-CE and a RRC parameter.

In step S1620, the UE may receive DCI from the first TRP. Here, the DCI may be an uplink DCI and/or a downlink DCI.

In step S1630, the UE may configure the signal transmission scheme of an uplink shared channel as the multi-TRP scheme or the single-TRP scheme based on the higher layer signal and the DCI. The UE may set the signal transmission scheme of the uplink shared channel as the single-TRP scheme or the multi-TRP scheme based on the higher layer signal and the DCI. For example, the signal transmission scheme of the uplink shared channel may be set based on a TCI state that is indicated by the higher layer signal and the DCI.

In step S1640, the UE may transmit an uplink shared channel signal to at least one TRP. When the signal transmission scheme of the uplink shared channel is the single-TRP scheme, the UE may transmit the uplink shared channel signal to a first TRP or a second TRP. On the other hand, when the signal transmission scheme of the uplink shared channel is the multi-TRP scheme, the UE may transmit the uplink shared channel signal to the first TRP and/or the second TRP.

In step S1650, the UE may configure the signal transmission scheme of an uplink control channel to be the same as the signal transmission scheme of the uplink shared channel signal based on the higher layer signal and the DCI.

In step S1660, the UE may transmit an uplink control channel signal to at least one TRP. When the signal transmission scheme of the uplink control channel is the single-TRP scheme, the UE may transmit the uplink control channel signal to the first TRP or the second TRP. On the other hand, when the signal transmission scheme of the uplink control channel is the multi-TRP scheme, the UE may transmit the uplink control channel signal to the first TRP and/or the second TRP.

A method of setting the transmission scheme of a PUCCH to the multi-TRP scheme after the transmission scheme of a PUSCH is set to the multi-TRP scheme may be described as follows.

During the process of setting the transmission scheme of the PUSCH, two joint/uplink TCI states may be indicated by a TCI state filed of downlink DCI. In addition, when the value of an SRS resource set indicator in uplink DCI that schedules the PUSCH is set to '10' or '11', the SRS resource set indicator in the uplink DCI may indicate that the PUSCH is to be transmitted using the two joint/uplink TCI states. In this case, the UE may transmit the PUCSH and then transmit the PUCCH to two TRPs. That is, the UE may transmit the PUSCH according to the multi-TRP scheme and then also transmit the PUCCH according to the multi-TRP scheme. To set the transmission scheme of the PUCCH as the multi-TRP scheme, a RRC configuration signal and/or a parameter may indicate that the two joint/uplink TCI states are to be applied. Here, a RRC may be configured to include mapping information between the two TCI states and a specific PUCCH resource and/or a group. For example, the two TCI states may be operated by being mapped to one PUCCH resource and/or a group. Alternatively, each of the two TCI states may be operated by being mapped to one distinct PUCCH resource and/or a group.

After the UE transmits the PUSCH according to the multi-TRP scheme, the UE may receive a RRC signal and/or a parameter indicating a switch of the transmission scheme of the PUCCH to the multi-TRP scheme. Here, the RRC signal and/or the parameter may indicate that two TCI states are to be applied for transmission of the PUCCH. However, when the RRC signal and/or the parameter includes information indicating the application of a single TCI state for PUCCH transmission or includes information indicating that no TCI state is to be applied, the UE may transmit the PUCCH according to the multi-TRP scheme by applying the two joint/DL TCI states indicated through the TCI state field in the downlink DCI. In this case, mapping information between a TCI state and a PUCCH resource and/or a group may be configured identically to configured information indicated through an existing RRC or MAC-CE. Alternatively, the mapping information between a TCI state and a PUCCH resource and/or a group may follow configured information indicated through a current RRC or MAC-CE.

When uplink DCI that schedules a PUCSH does not include an SRS resource set indicator, the UE may transmit the PUCSH using two joint/uplink TCI states indicated by a TCI state field of downlink DCI. After transmitting the PUSCH or receiving the uplink DCI, the UE may transmit a PUCCH to two TRPs based on two TCI states. That is, the UE may transmit the PUSCH according to the multi-TRP scheme and then switch the transmission scheme of the PUCCH to the multi-TRP scheme. To switch the transmission scheme of the PUCCH to the multi-TRP scheme, the UE may obtain, through a RRC configuration parameter and/or a signal, information indicating that the two joint/uplink TCI states are to be applied. However, when the RRC signal and/or the parameter includes information indicating the application of a single TCI state or includes information indicating that no TCI state is to be applied, the UE may transmit the PUCCH by applying the two joint/DL TCI states indicated through the TCI state field in the downlink DCI. Here, mapping information between a TCI state and a PUCCH resource and/or a group may be configured identically to configured information indicated through an existing RRC or MAC-CE. Alternatively, the mapping information between a TCI state and a PUCCH resource and/or a group may follow configured information indicated through a current RRC or MAC-CE.

Here, the PUCCH and the PUSCH that are transmitted according to the multi-TRP scheme may be transmitted using an SDM technique, a TDM technique, an FDM technique, or an SFN technique.

A method of setting the transmission scheme of a PUCCH to the multi-TRP scheme after the transmission scheme of a PUSCH is set to the single-TRP scheme may be described as follows.

During the process of setting the transmission scheme of the PUSCH, two joint/uplink TCI states may be indicated through a TCI state filed of downlink DCI. In addition, when the value of an SRS resource set indicator of uplink DCI is set to '00' or '01', the SRS resource set indicator may indicate that the PUSCH is to be transmitted using a first TCI state or a second TCI state of the two joint/uplink TCI states.

When the UE transmits the PUCCH after transmitting the PUSCH, the UE may transmit the PUCCH to one TRP by applying one TCI state. That is, the UE may transmit the PUSCH according to the singe-TRP scheme and then also transmit the PUCCH according to the single-TRP scheme.

The UE that transmits the PUCCH according to the single-TRP scheme may obtain, through RRC configuration information, information indicating that the first TCI state or the second TCI state of the two joint/uplink TCI states is to be applied. When receiving, through a RRC, information indicating the application of the two TCI states or indicating that no TCI state is to be applied, the UE may attempt to transmit the PUCCH by applying the first TCI state of the two joint/uplink TCI states indicated through the TCI state field in the downlink DCI. Alternatively, the UE may attempt to transmit the PUCCH by applying the second TCI state of the two joint/uplink TCI states indicated through the TCI state field in the downlink DCI. Alternatively, the UE may transmit the PUCCH by a joint/uplink TCI state that is applied for transmitting the PUSCH according to an SRS resource set indicator of the uplink DCI, of the two joint/uplink TCI states indicated through the TCI state field in the downlink DCI. That is, the UE may operate by applying the indication of the SRS resource set indicator in the uplink DCI to PUCCH transmission.

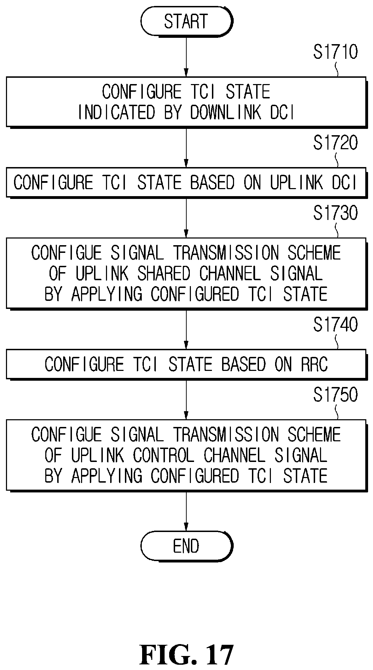

FIG. 17 illustrates an example of a procedure of configuring a signal transmission scheme for an uplink shared channel signal and an uplink control channel signal according to an embodiment of the present disclosure. FIG. 17 exemplifies a method that is performed by a UE.

In step S1710, the UE may configure a TCI state indicated by downlink DCI. Here, the downlink DCI may indicate two TCI states.

In step S1720, the UE may configure a TCI state based on uplink DCI. Here, the uplink DCI may indicate one or more TCI states of the two TCI states indicated by the downlink DCI.

In step S1730, the UE may configure the signal transmission scheme of an uplink shared channel signal by applying the configured TCI state. Here, the signal transmission scheme of the uplink shared channel may be set based on a TCI state that is indicated by the uplink DCI and the downlink DCI.

In step S1740, the UE may configure a TCI state based on a RRC. The RRC may indicate one TCI state of the two TCI states, which is used and indicated by the downlink DCI. When the RRC indicates one TCI state, the UE may configure the TCI state as the TCI state indicated by the RRC.

According to another embodiment, when the RRC indicates two TCI states or indicates no TCI state, the UE may configure the TCI state as one TCI state of the two TCI states indicated by the downlink DCI. Alternatively, when the RRC indicates two TCI states or indicates no TCI state, the UE may configure the TCI state as a TCI state, which is indicated by an SRS resource set indicator included in the uplink DCI, of the two TCI states indicated by the downlink DCI.

In step S1750, the UE may configure the signal transmission scheme of an uplink control channel by applying the configured TCI state. Here, the signal transmission scheme of the uplink control channel may be set based on a TCI state that is indicated by an uplink RRC. According to another embodiment, in step S1740, the UE may set the signal transmission scheme of an uplink control channel signal by applying the configured TCI state. According to another embodiment of the present disclosure, a switching operation between the single-TRP scheme and the multi-TRP scheme may be defined and performed so that both a PUCCH and a PUSCH transmit/receive data/signal with the same one TRP or transmit/receive data/signal with a plurality of identical TRPs.

A method of setting the transmission scheme of the PUCCH to the multi-TRP scheme after the transmission scheme of the PUSCH is set to the multi-TRP scheme may be described as follows.

According to an embodiment of the present disclosure, as described in the above embodiment, when the PUSCH is transmitted according to the multi-TRP scheme, the UE that transmits the PUSCH may transmit the PUCCH to one or more TRPs according to the multi-TRP scheme.

According to another embodiment of the present disclosure, since the PUCCH is transmitted to one or more identical TRPs, the PUCCH may be transmitted according to the multi-TRP scheme based on an SRS resource set indicator of uplink DCI, instead of configuration information for a RRC. For example, when the value of the SRS resource set indicator of the uplink DCI is set to '10' or '11', the UE may transmit the PUCCH using two joint/uplink TCI states. Here, through the RRC or MAC-CE, mapping information between the TCI states and a PUCCH resource and/or a group may be configured.

A method of setting the transmission scheme of the PUCCH to the single-TRP scheme after the transmission scheme of the PUSCH is set to the single-TRP scheme may be described as follows.

During a process of setting the transmission scheme of the PUSCH, the UE may receive downlink DCI. Here, a TCI state filed of the downlink DCI may indicate two joint/uplink TCI states. In addition, the UE may receive uplink DCI. When the value of an SRS resource set indicator of the uplink DCI is set to '00' or '01', the SRS resource set indicator may indicate that the PUSCH is to be transmitted using a first TCI state or a second TCI state of the two joint/uplink TCI states. After transmitting the PUSCH and receiving the uplink DCI, the UE may transmit the PUCCH by applying the TCI state that is used for PUSCH transmission. That is, the UE that transmits the PUSCH according to the singe-TRP scheme may transmit the PUCCH to the same TRP according to the same single-TRP scheme. In this case, TCI state configuration information for a PUCCH that is obtained earlier than the PUSCH transmission time or the uplink DCI reception time may be neglected.

In addition, in the above operation, after the UE transmits the PUSCH according to the singe-TRP scheme, the UE may transmit the PUCCH by applying a TCI state indicated by a RRC configuration or a TCI state indicated by an MAC-CE configuration. Alternatively, when the UE configures information on one TCI state regarding the single-TRP transmission scheme of the PUCCH through a RRC or an MAC-CE, the UE may transmit the PUCCH by applying a TCI state indicated by a RRC configuration or a TCI state indicated by an MAC-CE configuration. That is, the UE may transmit the PUCCH by applying TCI state configuration information that is configured most recently.

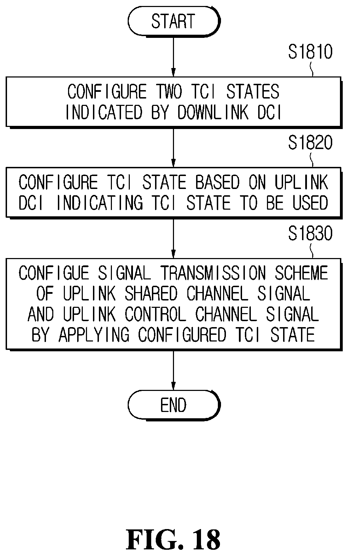

FIG. 18 illustrates an example of a procedure of configuring a signal transmission scheme for an uplink shared channel signal and an uplink control channel signal according to an embodiment of the present disclosure. FIG. 18 exemplifies a method that is performed by a UE.

In step S1810, the UE may configure a TCI state indicated by downlink DCI. Here, the downlink DCI may indicate two TCI states.

In step S1820, the UE may configure a TCI state based on uplink DCI that indicates a TCI state to be used. Here, the uplink DCI may indicate one or more TCI states of the two TCI states indicated by the downlink DCI.

In step S1830, the UE may configure the signal transmission scheme of an uplink shared channel signal and an uplink control channel signal by applying the configured TCI state. Here, the signal transmission scheme of an uplink shared channel and an uplink control channel may be set based on a TCI state that is indicated by the uplink DCI and the downlink DCI. Accordingly, the UE may set the signal transmission scheme of the uplink control channel to be the same as that of the uplink shared channel and transmit both the uplink shared channel and the uplink control channel accordingly.

According to another embodiment of the present disclosure, when a switching operation between the single-TRP scheme and the multi-TRP scheme is performed, the single-TRP scheme or the multi-TRP scheme may be independently switched for a PUCCH and a PUSCH. In this case, the UE may set the transmission schemes of the PUCCH and the PUSCH to the single-TRP scheme or the multi-TRP scheme based on additional configuration information for the switching operation and transmit uplink signals to the same TRP.

Here, when the value of an SRS resource set indicator in the uplink DCI is '10', two TCI states may be applied for PUSCH transmission. On the other hand, when the value of the SRS resource set indicator in the uplink DCI is '11', a TCI state used for PUSCH transmission may be applied identically to subsequent PUCCH transmission.

In this case, the value '11' of the field for selecting a TCI state may be mapped to one of the application of a first TCI state, the application of a second TCI state, and the application of both TCI states. Mapping information for the value of the field for selecting a TCI state may be configured by a RRC or an MAC-CE. That is, based on a configuration value mapped to the codepoint '11' of the field for selecting a TCI state, of two joint/uplink TCI states indicated by a TCI state field in the downlink DCI, the first TCI state, the second TCI state, or both TCI states may be applied to PUCCH transmission.

In this case, when the value of the field for selecting a TCI state is '11', the PUCCH and the PUSCH may be transmitted to the same TRP(s). Here, the same TRP(s) transmitting and receiving the PUCCH and the PUSCH may be distinguished according to the positions of the first TCI state and the second TCI state mapped to the codepoint of the TCI state field.

On the other hand, when the value of the field for selecting a TCI state is not '11', the value of the field may indicate only a transmission scheme for the PUSCH. A transmission scheme for the PUCCH may be set based on TCI state configuration information that is configured by a RRC. Accordingly, the transmission schemes of the PUCCH and the PUSCH may be independently set to the single-TRP scheme or the multi-TRP scheme.

According to an embodiment of the present disclosure, a method of switching between the single-TRP scheme and the multi-TRP scheme using uplink DCI without an SRS resource set indicator may be as described below.

When uplink DCI does not include an SRS resource set indicator, the UE may set the transmission scheme of an uplink signal to the single-TRP scheme or the multi-TRP scheme based on joint/uplink TCI state(s) indicated by a TCI state field in downlink DCI received prior to receiving the uplink DCI.

When the TCI state field in the downlink DCI indicates a single TCI state, the TCI state field may indicate the single-TRP scheme for uplink signal transmission. On the other hand, when the TCI state field in the downlink DCI indicates two TCI state, the TCI state field may indicate the multi-TRP scheme for uplink signal transmission. According to an embodiment, TCI state configuration information of a TCI state field may be applied only to a transmission process for a PUSCH.

On the other hand, according to another embodiment, TCI state configuration information of a TCI state field may also be applied to a transmission process for a PUCCH. In this case, after receiving uplink DCI or after transmitting the PUSCH scheduled by the uplink DCI, the UE may transmit the PUCCH in the single-TRP or multi-TRP scheme by applying the TCI state configuration used for PUSCH transmission.

In this case, the PUCCH may be transmitted by applying a TCI state indicated through a TCI state field, only when no TCI state configuration information for PUCCH transmission is delivered via a RRC or an MAC-CE. Alternatively, the indicated TCI state may be applied only during the PUCCH transmission process within a predefined offset after the TCI state is applied to the PUSCH.

Here, the uplink DCI may include one SRS resource indicator (SRI) and one transmitted precoding matrix indicator (TPMI) field. In this case, the PUSCH and/or the PUCCH may be transmitted by applying the SRI and/or a value indicated by one TPMI field.

Here, the uplink DCI may two SRIs and two TPMI fields. In addition, when a codepoint indicated by a TCI state field in downlink DCI is mapped to two joint/uplink TCI states, a first joint/uplink TCI state is not mapped to any TCI state, while a second TCI state may be mapped to a specific TCI state. In this case, the PUSCH and/or the PUCCH may be transmitted by applying a second SRI and a second TPMI field value. On the other hand, when a codepoint indicated by the TCI state field in the downlink DCI is mapped to two joint/uplink TCI states, a first joint/uplink TCI state may be mapped to a specific TCI state, while a second TCI state may not be mapped to any TCI state. In this case, the PUSCH and/or the PUCCH may be transmitted by applying a first SRI and a first TPMI field value.

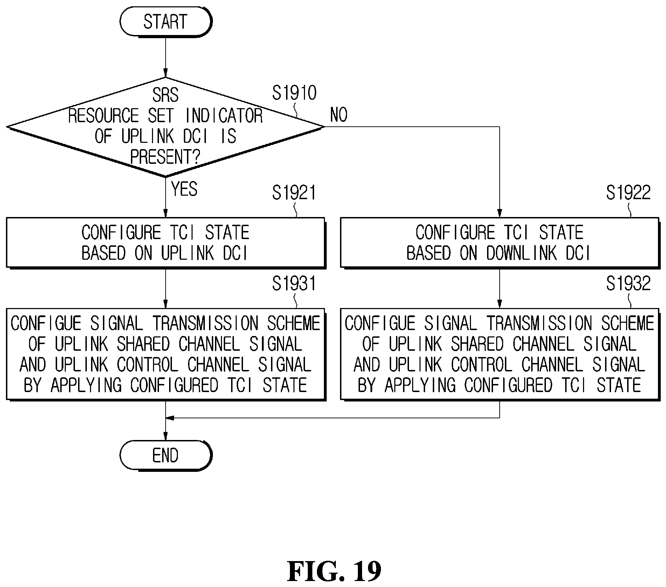

FIG. 19 illustrates an example of a procedure of configuring a transmission scheme of an uplink signal based on whether an SRS resource set indicator of uplink DCI is present according to an embodiment of the present disclosure. FIG. 19 exemplifies a method that is performed by a UE.

In step S1910, the UE may determine whether an SRS resource set indicator is present in uplink DCI.

When the SRS resource set indicator is present in the uplink DCI, in operation S1921, the UE may configure a TCI state based on the uplink DCI. Here, the uplink DCI may indicate one or more TCI states of two TCI states indicated by downlink DCI that is previously received.

In step S1931, the UE may configure the signal transmission scheme of an uplink shared channel signal and an uplink control channel signal by applying the configured TCI state. Specifically, the UE may set the signal transmission scheme of the uplink shared channel signal and the uplink control channel signal by applying the TCI state that is configured based on the uplink DCI. Here, the UE may set the signal transmission scheme of the uplink shared channel signal by applying a TCI state that is configured based on a RRC.

On the other hand, when the SRS resource set indicator is not present in the uplink DCI, in operation S1922, the UE may configure a TCI state based on the downlink DCI. Here, the downlink DCI may indicate one or more TCI states.

In step S1932, the UE may transmit the uplink shared channel signal and the uplink control channel signal to a TRP by applying the configured TCI state. Specifically, the UE may set the uplink shared channel signal and the uplink control channel signal to a TRP by applying the TCI state that is configured based on the downlink DCI.

According to an embodiment of the present disclosure, when there is no TCI state configuration command (for example, TCI state configuration information transmitted via a RRC, an MAC-CE, or DCI) to set the transmission scheme of a PUCCH and a PUSCH to the single-TRP scheme or the multi-TRP scheme, the UE may maintain the configuration of an existing TCI state. Alternatively, when an indication that a current TCI state is to be maintained for a predetermined period is indicated by a RRC, an MAC-CE, DCI, or a combination thereof, the UE may maintain the configuration of the existing TCI state. In this case, configuration information regarding the predetermined period during which the TCI state configuration is to be maintained may be indicated to the UE. In addition, the maintenance of the existing TCI state configuration may be performed by operating an existing transmission scheme without switching the transmission scheme of the PUCCH and the PUSCH to the single-TRP scheme or the multi-TRP scheme.

In addition, when TCI state configuration information is delivered through signaling that indicates the existing TCI state configuration, the UE may release the maintenance of the existing TCI state configuration and transmit the PUCCH and the PUSCH in the single-TRP scheme and the multi-TRP scheme according to the indicated TCI state configuration information.

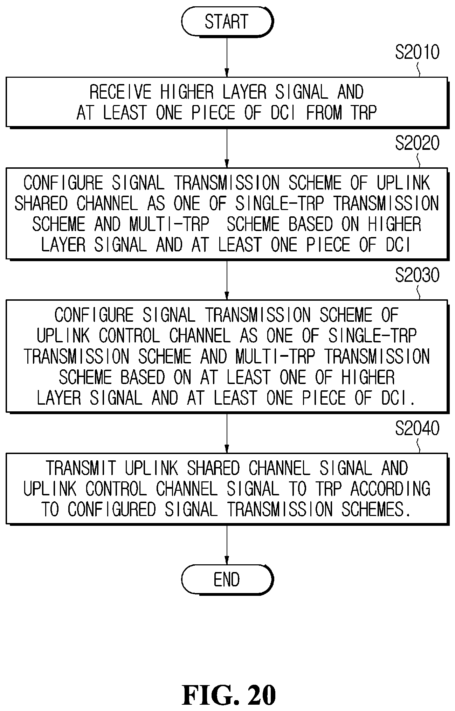

FIG. 20 illustrates an example of a procedure of configuring a transmission scheme of an uplink signal according to an embodiment of the present disclosure. FIG. 20 exemplifies a method that is performed by a UE.

In step S2010, the UE may receive a higher layer signal and at least one piece of DCI from a TRP.

In step S2020, the UE may configure a signal transmission scheme of an uplink shared channel as one of the single-TRP (sTRP) transmission scheme and the multi-TRP (mTRP) scheme based on the higher layer signal and the at least one piece of DCI.

In step S2030, the UE may configure a signal transmission scheme of an uplink control channel as one of the sTRP transmission scheme and the mTRP transmission scheme based on at least one of the higher layer signal and the at least one piece of DCI.

In step S2040, the UE may transmit the uplink shared channel signal and the uplink control channel signal to a TRP according to the configured signal transmission schemes.

Here, the signal transmission scheme of the uplink shared channel may be configured based on a scheme indicated by a sounding reference signal (SRS) resource set indicator of uplink DCI.

Here, the signal transmission scheme of the uplink control channel and the signal transmission scheme of the uplink shared channel may be configured independently to each other.

Here, the signal transmission scheme of the uplink control channel may be configured based on a transmission configuration indicator (TCI) state indicator indicated by the higher layer signal.

Here, the signal transmission scheme of the uplink control channel may be configured based on TCI state-related information of a radio resource control (RRC) signal.

Here, the signal transmission scheme of the uplink control channel may be configured to be the same as the signal transmission scheme of the uplink shared channel.

Here, based on a value of the SRS resource set indicator of the uplink DCI being a predetermined value, the signal transmission scheme of the uplink control channel may be configured to be the same as the signal transmission scheme of the uplink shared channel.

Here, based on the uplink DCI not including the SRS resource set indicator, the signal transmission scheme of the uplink shared channel may be configured based on a scheme indicated by TCI state-related information of downlink DCI that is transmitted before the uplink DCI.

Meanwhile, the TRP may receive a signal that is transmitted according to a transmission scheme corresponding to the operations described in FIG. 20.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-stage language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

Industrial Applicability

The present invention may be used for a device that transmits and receives signals and for a transmitter and a receiver.

**Claims**

1. A method of operating a terminal in a wireless communication system, the method comprising:

   receiving a higher layer signal and at least one piece of downlink control information (DCI) from a transmission reception point (TRP);
   configuring a signal transmission scheme of an uplink shared channel as one of a single-TRP (sTRP) transmission scheme and a multi-TRP (mTRP) scheme based on the higher layer signal and the at least one piece of DCI;
   configuring a signal transmission scheme of an uplink control channel as one of the sTRP transmission scheme and the mTRP transmission scheme based on at least one of the higher layer signal and the at least one piece of DCI; and
   transmitting an uplink shared channel signal and an uplink control channel signal to the TRP according to the configured signal transmission scheme.

2. The method of claim 1, wherein the signal transmission scheme of the uplink shared channel is configured based on a scheme indicated by a sounding reference signal (SRS) resource set indicator of uplink DCI.

3. The method of claim 2, wherein the signal transmission scheme of the uplink control channel and the signal transmission scheme of the uplink shared channel are configured independently of each other.

4. The method of claim 3, wherein the signal transmission scheme of the uplink control channel is configured based on a transmission configuration indicator (TCI) state indicator indicated by the higher layer signal.

5. The method of claim 3, wherein the signal transmission scheme of the uplink control channel is configured based on TCI state-related information of a radio resource control (RRC) signal.

6. The method of claim 2, wherein the signal transmission scheme of the uplink control channel is configured to be the same as the signal transmission scheme of the uplink shared channel.

7. The method of claim 6, wherein, based on a value of the SRS resource set indicator of the uplink DCI being a predetermined value, the signal transmission scheme of the uplink control channel is configured to be the same as the signal transmission scheme of the uplink shared channel.

8. The method of claim 6, wherein, based on the uplink DCI not including the SRS resource set indicator, the signal transmission scheme of the uplink shared channel is configured based on a scheme indicated by TCI state-related information of downlink DCI that is transmitted before the uplink DCI.

9. A method of operating a transmission and reception point (TRP) in a wireless communication system, the method comprising:

transmitting a higher layer signal and at least one piece of downlink control information (DCI) to a terminal;
receiving an uplink shared channel signal from the terminal; and
receiving an uplink control channel signal from the terminal,
wherein a signal transmission scheme of an uplink shared channel and a signal transmission scheme of an uplink control channel are configured as one of a single-TRP (sTRP) transmission scheme and a multi-TRP (mTRP) scheme based on the higher layer signal and the at least one piece of DCI.

10. The method of claim 9, wherein the signal transmission scheme of the uplink shared channel is configured based on a scheme indicated by a sounding reference signal (SRS) resource set indicator of uplink DCI.

11. The method of claim 10, wherein the signal transmission scheme of the uplink control channel and the signal transmission scheme of the uplink shared channel are configured independently of each other.

12. The method of claim 11, wherein the signal transmission scheme of the uplink control channel is configured based on a transmission configuration indicator (TCI) state indicator indicated by the higher layer signal.

13. The method of claim 11, wherein the signal transmission scheme of the uplink control channel is configured based on TCI state-related information of a radio resource control (RRC) signal.

14. The method of claim 10, wherein the signal transmission scheme of the uplink control channel is configured to be the same as the signal transmission scheme of the uplink shared channel.

15. The method of claim 14, wherein, based on a value of the SRS resource set indicator of the uplink DCI being a predetermined value, the signal transmission scheme of the uplink control channel is configured to be the same as the signal transmission scheme of the uplink shared channel.

16. The method of claim 14, wherein, based on the uplink DCI not including the SRS resource set indicator, the signal transmission scheme of the uplink shared channel is configured based on a scheme indicated by TCI state-related information of downlink DCI that is transmitted before the uplink DCI.

17. A terminal in a wireless communication system, the terminal comprising:

at least one transmitter;

at least one receiver;

at least one processor; and

at least one memory that is operatively coupled to the at least one processor and stores instructions that cause, when executed, the at least one processor to perform a specific operation,

wherein the specific operation includes:

receiving a higher layer signal and at least one piece of downlink control information (DCI) from a transmission reception point (TRP);

configuring a signal transmission scheme of an uplink shared channel as one of a single-TRP (sTRP) transmission scheme and a multi-TRP (mTRP) scheme based on the higher layer signal and the at least one piece of DCI;

configuring a signal transmission scheme of an uplink control channel as one of the sTRP transmission scheme and the mTRP transmission scheme based on at least one of the higher layer signal and the at least one piece of DCI; and

transmitting an uplink shared channel signal and an uplink control channel signal to the TRP according to the configured signal transmission scheme.

**18.** A transmission reception point (TRP) operating in a wireless communication system, the TRP comprising:

at least one transmitter;

at least one receiver;

at least one processor; and

at least one memory that is operatively coupled to the at least one processor and stores instructions that cause, when executed, the at least one processor to perform a specific operation,

wherein the specific operation includes:

receiving an uplink shared channel signal from the terminal; and

receiving an uplink control channel signal from the terminal, and

wherein a signal transmission scheme of an uplink shared channel and a signal transmission scheme of an uplink control channel are configured as one of a single-TRP (sTRP) transmission scheme and a multi-TRP (mTRP) scheme based on the higher layer signal and the at least one piece of DCI.

**FIG. 1**

**FIG. 2**

**FIG. 3**

EP 4 753 163 A1

410

| 411 | 412 | 413 | 414 | 415 | 416 |
|---|---|---|---|---|---|
| CHANNEL CODING AND MODULATION | S-to-P | N IFFT | P-to-S | CP ADDITION | UC |

DATA → CHANNEL CODING AND MODULATION → S-to-P → N IFFT → P-to-S → CP ADDITION → UC → SIGNAL

**FIG. 4A**

420

| 421 | 422 | 423 | 424 | 425 | 426 |
|---|---|---|---|---|---|
| DC | CP REMOVAL | S-to-P | N FFT | P-to-S | CHANNEL DECODING AND DEMODULATION |

SIGNAL → DC → CP REMOVAL → S-to-P → N FFT → P-to-S → CHANNEL DECODING AND DEMODULATION → DATA

**FIG. 4B**

| ··· | SYSTEM FRAME #1023 | SYSTEM FRAME #0 | SYSTEM FRAME #1 | SYSTEM FRAME #2 | ··· | SYSTEM FRAME #1023 | SYSTEM FRAME #0 | SYSTEM FRAME #1 | ··· |

←—— 10ms ——→

| SUBFRAME #0 | SUBFRAME #1 | SUBFRAME #2 | SUBFRAME #3 | SUBFRAME #4 | SUBFRAME #5 | SUBFRAME #6 | SUBFRAME #7 | SUBFRAME #8 | SUBFRAME #9 |

←— 1ms —→

←———————————— HALF FRAME #0(5ms) ————————————→  ←———————————— HALF FRAME #1(5ms) ————————————→

**FIG. 5**

SUBFRAME(1ms)

| SLOT #0 | SLOT #1 | ・・・ | SLOT #n |

**FIG. 6**

SLOT

| #0 | #1 | #2 | #3 | #4 | #5 | #6 | #7 | #8 | #9 | #10 | #11 | #12 | #13 |

OFDM SYMBOL

**FIG. 7**

**FIG. 8**

**FIG. 9**

EP 4 753 163 A1

**FIG. 10**

Step #1 : RRC signaling

Type:separate

DL

UL

Type:joint

DL/UL

or

Maximum 128 states can be configured

Step #2 : MAC-CE activation

| Codepoint | TCI state(s) | TCI state(s) |
|---|---|---|
| #1 | | |
| ... | | |
| #8 | | |

Maximum 32 states can be activated

| Codepoint | TCI state(s) | TCI state(s) |
|---|---|---|
| #1 | | |
| ... | | |
| #8 | | |

Maximum 16 states can be activated

Step #3 : DCI indication

#3

#8

**FIG. 11**

TRP#2                  TRP#1                                      TERMINAL

INITIAL ACCESS, CONNECTION,
CONFIGURATION(S1210)

CONFIGUE TO sTRP MODE(S1220)

FIRST UPLINK SIGNAL(S1230)

CONFIGURE TRANSMISSION
SCHEME SWITCH(S1240)

SIGNAL/MESSAGE FOR TRANSMISSION
SCHEME SWITCH(S1250)

CONFIGUE TO mTRP MODE(S1260)

SECOND UPLINK SIGNAL(S1270)

# FIG. 12

TRP#2  TRP#1                                          TERMINAL

HIGHER LAYER SIGNAL(S1310)

DCI(S1320)

CONFIGUE SIGNAL TRANSMISSION SCHEME
OF UPLINK SHARED CHANNEL BASED ON
HIGHER LAYER SIGNAL AND DCI(S1330)

UPLINK SHARED CHANNEL SIGNAL(S1340)

CONFIGUE SIGNAL TRANSMISSION SCHEME
OF UPLINK CONTROL CHANNEL BASED ON
HIGHER LAYER SIGNAL(S1350)

UPLINK CONTROL CHANNEL SIGNAL(S1360)

# FIG. 13

START

S1410

CONFIGURE TCI STATE INDICATED
BY HIGHER LAYER SIGNAL

S1420

CONFIGUE SIGNAL TRANSMISSION SCHEME
OF UPLINK CONTROL CHANNEL SIGNAL
BASED ON CONFIGURED TCI STATE

S1430

TRANSMIT UPLINK CONTROL CHANNEL
SIGNAL TO TRP ACCORDING SET
SIGNAL TRANSMISSION SCHEME

END

**FIG. 14**

START

S1510

CONFIGURE TCI STATE SET INDICATED
BY HIGHER LAYER SIGNAL/DOWNLINK DCI

S1520

CONFIGURE TCI STATE INDICATED
BY RRC IN TCI STATE SET

S1530

CONFIGUE SIGNAL TRANSMISSION SCHEME
OF UPLINK CONTROL CHANNEL
BASED ON CONFIGURED TCI STATE

END

# FIG. 15

TRP#2  TRP#1                                                    TERMINAL

HIGHER LAYER SIGNAL(S1610)

DCI(S1620)

CONFIGUE SIGNAL TRANSMISSION
SCHEME OF UPLINK SHARED
CHANNEL TO MTRP/STRP(S1630)

UPLINK SHARED CHANNEL SIGNAL(S1640)

CONFIGUE SIGNAL TRANSMISSION
SCHEME OF UPLINK CONTROL
CHANNEL TO BE THE SAME AS
SIGNAL TRANSMISSION SCHEME OF
UPLINK SHARED CHANNEL(S1650)

UPLINK CONTROL CHANNEL SIGNAL(S1660)

# FIG. 16

START

S1710
CONFIGURE TCI STATE
INDICATED BY DOWNLINK DCI

S1720
CONFIGURE TCI STATE BASED ON UPLINK DCI

S1730
CONFIGUE SIGNAL TRANSMISSION SCHEME
OF UPLINK SHARED CHANNEL SIGNAL
BY APPLYING CONFIGURED TCI STATE

S1740
CONFIGURE TCI STATE BASED ON RRC

S1750
CONFIGUE SIGNAL TRANSMISSION SCHEME
OF UPLINK CONTROL CHANNEL SIGNAL
BY APPLYING CONFIGURED TCI STATE

END

**FIG. 17**

START

S1810

CONFIGURE TWO TCI STATES
INDICATED BY DOWNLINK DCI

S1820

CONFIGURE TCI STATE BASED ON UPLINK
DCI INDICATING TCI STATE TO BE USED

S1830

CONFIGUE SIGNAL TRANSMISSION SCHEME
OF UPLINK SHARED CHANNEL SIGNAL
AND UPLINK CONTROL CHANNEL SIGNAL
BY APPLYING CONFIGURED TCI STATE

END

# FIG. 18

START

SRS
RESOURCE SET INDICATOR
OF UPLINK DCI IS
PRESENT?  S1910

NO

YES  S1921

CONFIGURE TCI STATE
BASED ON UPLINK DCI

S1922

CONFIGURE TCI STATE
BASED ON DOWNLINK DCI

S1931

CONFIGUE SIGNAL TRANSMISSION SCHEME
OF UPLINK SHARED CHANNEL SIGNAL
AND UPLINK CONTROL CHANNEL SIGNAL
BY APPLYING CONFIGURED TCI STATE

S1932

CONFIGUE SIGNAL TRANSMISSION SCHEME
OF UPLINK SHARED CHANNEL SIGNAL
AND UPLINK CONTROL CHANNEL SIGNAL
BY APPLYING CONFIGURED TCI STATE

END

**FIG. 19**

START

S2010

RECEIVE HIGHER LAYER SIGNAL AND
AT LEAST ONE PIECE OF DCI FROM TRP

S2020

CONFIGURE SIGNAL TRANSMISSION SCHEME OF UPLINK
SHARED CHANNEL AS ONE OF SINGLE-TRP TRANSMISSION
SCHEME AND MULTI-TRP SCHEME BASED ON HIGHER
LAYER SIGNAL AND AT LEAST ONE PIECE OF DCI

S2030

CONFIGURE SIGNAL TRANSMISSION SCHEME OF
UPLINK CONTROL CHANNEL AS ONE OF SINGLE-TRP
TRANSMISSION SCHEME AND MULTI-TRP TRANSMISSION
SCHEME BASED ON AT LEAST ONE OF HIGHER
LAYER SIGNAL AND AT LEAST ONE PIECE OF DCI.

S2040

TRANSMIT UPLINK SHARED CHANNEL SIGNAL AND
UPLINK CONTROL CHANNEL SIGNAL TO TRP ACCORDING
TO CONFIGURED SIGNAL TRANSMISSION SCHEMES.

END

**FIG. 20**

## INTERNATIONAL SEARCH REPORT

| International application No. |
|---|
| **PCT/KR2024/014640** |

**A. CLASSIFICATION OF SUBJECT MATTER**

**H04B 7/0413**(2017.01)i; **H04W 72/1268**(2023.01)i; **H04W 72/21**(2023.01)i; **H04W 72/231**(2023.01)i; **H04W 72/232**(2023.01)i; **H04L 5/00**(2006.01)i

According to International Patent Classification (IPC) or to both national classification and IPC

**B. FIELDS SEARCHED**

Minimum documentation searched (classification system followed by classification symbols)

H04B 7/0413(2017.01); H04L 1/16(2006.01); H04L 1/18(2006.01); H04L 29/08(2006.01); H04L 5/00(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: TRP, 상위 계층 신호(upper layer signal), DCI, sTRP, mTRP, 상향링크 공유 채널 (PUSCH), 상향링크 제어 채널(PUCCH)

**C. DOCUMENTS CONSIDERED TO BE RELEVANT**

| Category* | Citation of document, with indication, where appropriate, of the relevant passages | Relevant to claim No. |
|---|---|---|
| Y<br>A | PANASONIC. Unified TCI framework extension for multi-TRP. R1-2304375, 3GPP TSG RAN WG1 Meeting #113. Incheon, Korea. 15 May 2023.<br>See pages 4, 6 and 18. | 1-3,6,9-11,14,17-18<br>4-5,7-8,12-13,15-16 |
| Y | KR 10-2021-0124251 A (QUALCOMM INCORPORATED) 14 October 2021 (2021-10-14)<br>See paragraphs [0068]-[0072]; claim 1; and figure 5. | 1-3,6,9-11,14,17-18 |
| A | US 2021-0051699 A1 (PANASONIC INTELLECTUAL PROPERTY CORPORATION OF AMERICA) 18 February 2021 (2021-02-18)<br>See paragraphs [0091]-[0117]; and figures 9-10. | 1-18 |
| A | US 2019-0320420 A1 (QUALCOMM INCORPORATED) 17 October 2019 (2019-10-17)<br>See paragraphs [0116]-[0120]; and figure 11. | 1-18 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **31 December 2024** | **31 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/014640** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2023-087245 A1 (QUALCOMM INCORPORATED) 25 May 2023 (2023-05-25)<br>See paragraphs [0109]-[0113]; and figure 9. | 1-18 |

Form PCT/ISA/210 (second sheet) (July 2022)

## INTERNATIONAL SEARCH REPORT
### Information on patent family members

| International application No. |
|---|
| **PCT/KR2024/014640** |

| Patent document cited in search report | | | Publication date (day/month/year) | Patent family member(s) | | | Publication date (day/month/year) |
|---|---|---|---|---|---|---|---|
| KR | 10-2021-0124251 | A | 14 October 2021 | AU | 2020-222877 | A1 | 19 August 2021 |
| | | | | BR | 112021015206 | A2 | 28 September 2021 |
| | | | | CA | 3127500 | A1 | 20 August 2020 |
| | | | | CL | 2021002134 | A1 | 25 February 2022 |
| | | | | CN | 113412596 | A | 17 September 2021 |
| | | | | CO | 2021010561 | A2 | 30 August 2021 |
| | | | | EP | 3925117 | A1 | 22 December 2021 |
| | | | | IL | 284908 | A | 30 September 2021 |
| | | | | IL | 284908 | B1 | 01 October 2024 |
| | | | | IL | 284908 | D0 | 30 September 2021 |
| | | | | JP | 2022-520366 | A | 30 March 2022 |
| | | | | JP | 2024-095675 | A | 10 July 2024 |
| | | | | JP | 7457030 | B2 | 27 March 2024 |
| | | | | KR | 10-2024-0005132 | A | 11 January 2024 |
| | | | | MX | 2021009812 | A | 08 September 2021 |
| | | | | SA | 521422735 | B1 | 02 July 2024 |
| | | | | SG | 11202107798 | A | 30 August 2021 |
| | | | | TW | 202038570 | A | 16 October 2020 |
| | | | | TW | I828855 | B | 11 January 2024 |
| | | | | US | 10797832 | B2 | 06 October 2020 |
| | | | | US | 10931408 | B2 | 23 February 2021 |
| | | | | US | 11546094 | B2 | 03 January 2023 |
| | | | | US | 2020-0266937 | A1 | 20 August 2020 |
| | | | | US | 2021-0006363 | A1 | 07 January 2021 |
| | | | | US | 2021-0250135 | A1 | 12 August 2021 |
| | | | | WO | 2020-167612 | A1 | 20 August 2020 |
| US | 2021-0051699 | A1 | 18 February 2021 | CN | 112272931 | A | 26 January 2021 |
| | | | | CN | 112272931 | B | 09 April 2024 |
| | | | | EP | 3651396 | A1 | 13 May 2020 |
| | | | | EP | 3878124 | A1 | 15 September 2021 |
| | | | | JP | 2022-511193 | A | 31 January 2022 |
| | | | | JP | 7519304 | B2 | 19 July 2024 |
| | | | | US | 11711116 | B2 | 25 July 2023 |
| | | | | WO | 2020-094344 | A1 | 14 May 2020 |
| US | 2019-0320420 | A1 | 17 October 2019 | CN | 112075028 | A | 11 December 2020 |
| | | | | CN | 112075028 | B | 09 August 2024 |
| | | | | EP | 3782294 | A1 | 24 February 2021 |
| | | | | EP | 3782294 | B1 | 03 May 2023 |
| | | | | US | 11026218 | B2 | 01 June 2021 |
| | | | | WO | 2019-204156 | A1 | 24 October 2019 |
| WO | 2023-087245 | A1 | 25 May 2023 | CN | 118251866 | A | 25 June 2024 |
| | | | | EP | 4434184 | A1 | 25 September 2024 |

Form PCT/ISA/210 (patent family annex) (July 2022)